(19) Europäisches Patentamt
European Patent Office
Office européen des brevets

(11) EP 4 349 680 A1

(12) EUROPEAN PATENT APPLICATION
published in accordance with Art. 153(4) EPC

(43) Date of publication:
10.04.2024 Bulletin 2024/15

(21) Application number: 22815864.8

(22) Date of filing: 19.05.2022

(51) International Patent Classification (IPC):
B61B 13/00 (2006.01)      F16H 1/02 (2006.01)
F16H 1/06 (2006.01)      F16H 1/14 (2006.01)
F16H 1/16 (2006.01)      B62D 9/00 (2006.01)
F16F 1/06 (2006.01)

(52) Cooperative Patent Classification (CPC):
B61B 13/00; B62D 9/00; F16F 1/06; F16H 1/02;
F16H 1/06; F16H 1/14; F16H 1/16

(86) International application number:
PCT/JP2022/020779

(87) International publication number:
WO 2022/255112 (08.12.2022 Gazette 2022/49)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 02.06.2021 JP 2021093058

(71) Applicant: NSK Ltd.
Tokyo 141-8560 (JP)

(72) Inventor: FUJIOKA, Ko
Fujisawa-shi, Kanagawa 251-8501 (JP)

(74) Representative: SSM Sandmair
Patentanwälte Rechtsanwalt
Partnerschaft mbB
Joseph-Wild-Straße 20
81829 München (DE)

(54) DRIVING WHEEL AND TROLLEY

(57) To improve the running performance. A drive wheel 103 includes a first input shaft 34A and a second input shaft 34B; a first output shaft 40A and a second output shaft 40B; a first spur gear mechanism 13A that transmits rotational force of the first input shaft to the first output shaft; a second spur gear mechanism 13B that transmits rotational force of the second input shaft to the second output shaft; a wheel 16 connected to an axle 37; a pivot shaft 35 that supports the wheel in a pivotable manner via the axle; a first power conversion mechanism 15A that transmits the rotational force of the first output shaft to one end portion of the axle; a second power conversion mechanism 15B that transmits the rotational force of the second output shaft to another end portion of the axle; a first slide mechanism 25A that allows one end portion of the axle to be moved along the extending direction of the first output shaft, while maintaining transmission of the rotational force to the one end portion of the axle; a second slide mechanism 25B that allows the other end portion of the axle to be moved along the extending direction of the second output shaft, while maintaining transmission of the rotational force to the other end portion of the axle, and an elastic member 26 that elastically supports the axle.

FIG.9

## Description

Field

The present invention relates to a drive wheel and a cart.

Background

Patent Literature 1 discloses a drive wheel and a cart with drive wheels. The drive wheel includes a first input shaft and a second input shaft coaxially disposed, a first output shaft and a second output shaft disposed on different axes, a first spur gear mechanism that transmits the rotational force of the first input shaft to the first output shaft, a second spur gear mechanism that transmits the rotational force of the second input shaft to the second output shaft, a wheel connected to an axle, a pivot shaft that supports the wheel in a pivotable manner via the axle, a first power conversion mechanism that transmits the rotational force of the first output shaft to one end portion of the axle, and a second power conversion mechanism that transmits the rotational force of the second output shaft to the other end portion of the axle. Moreover, in the drive wheel, the rotational axial center of the wheel along the vertical direction intersecting the axial center direction of the axle, is preferably arranged offset in the horizontal direction orthogonal to the axial center direction of the axle with respect to the axial center of the pivot shaft.

Citation List

Patent Literature

Patent Literature 1: Japanese Patent Application Laid-open No. 2020-024033

Summary

Technical Problem

Either to change the direction of the wheel or to rotate the wheel, the drive wheel disclosed in Patent Literature 1 is capable of simultaneously operating the two driving devices installed therein, while simplifying the structure and ensuring a sufficient minimum ground clearance. Then, in the drive wheel, by offsetting the wheel, when the wheel is not being driven, it is possible to passively turn the wheel by the external force applied from the horizontal direction.

In this example, it is desired not to reduce the running performance of the drive wheel and the cart disclosed in Patent Literature 1, even if there are ups and downs or obstacles such as trash or pebbles on the ground surface (floor surface).

The present disclosure has been made in view of the above problems, and an object of the present disclosure is to provide a drive wheel and a cart that can improve the running performance.

Solution to Problem

To achieve the above object, a drive wheel according to an embodiment of the present disclosure, comprising: a first input shaft and a second input shaft coaxially disposed; a first output shaft and a second output shaft disposed on different axes; a first spur gear mechanism that transmits rotational force of the first input shaft to the first output shaft; a second spur gear mechanism that transmits rotational force of the second input shaft to the second output shaft; a wheel connected to an axle; a pivot shaft that supports the wheel in a pivotable manner via the axle; a first power conversion mechanism that transmits the rotational force of the first output shaft to one end portion of the axle; a second power conversion mechanism that transmits the rotational force of the second output shaft to another end portion of the axle; a first slide mechanism that allows one end portion of the axle to be moved along an extending direction of the first output shaft, while maintaining transmission of the rotational force to the one end portion of the axle; a second slide mechanism that allows the other end portion of the axle to be moved along an extending direction of the second output shaft, while maintaining transmission of the rotational force to the other end portion of the axle; a first elastic member that elastically supports one end portion of the axle; and a second elastic member that elastically supports the other end portion of the axle, wherein a rotational axial center of the wheel along a vertical direction intersecting an axial center of the axle is arranged shifted in a horizontal direction orthogonal to the axial center of the axle with respect to an axial center of the pivot shaft.

As a desirable embodiment of the drive wheel, the first output shaft and the second output shaft are arranged on both sides in an axial center direction of the axle.

As a desirable embodiment of the drive wheel, the first power conversion mechanism and the second power conversion mechanism are arranged on both sides in the axial center direction of the axle.

As a desirable embodiment of the drive wheel, the first power conversion mechanism and the second power conversion mechanism are arranged on an upper side in a vertical direction intersecting the axial center direction of the axle.

As a desirable embodiment of the drive wheel, the first power conversion mechanism transmits the rotational force of the first output shaft to one end portion of the axle the axial center direction of which is different from that of the first output shaft, and to which one of a bevel gear mechanism, a helical gear mechanism, a worm gear mechanism, a crown gear mechanism, and a universal joint mechanism is applied, and the second power conversion mechanism transmits the rotational force of the second output shaft to one end portion of the axle the axial center direction of which is different from that of the second output shaft, and to which one of a bevel gear mechanism, a helical gear mechanism, a worm gear mechanism, a crown gear mechanism, and a universal joint mechanism is applied.

To achieve the above object, a drive wheel according to an embodiment of the present disclosure, comprising: a first input shaft and a second input shaft coaxially disposed; a first output shaft and a second output shaft disposed on different axes; a first spur gear mechanism that transmits rotational force of the first input shaft to the first output shaft; a second spur gear mechanism that transmits rotational force of the second input shaft to the second output shaft; a wheel connected to an axle; a pivot shaft that supports the wheel in a pivotable manner via the axle; a first power conversion mechanism that transmits the rotational force of the first output shaft to one end portion of a connection shaft parallel to the axle; a second power conversion mechanism that transmits the rotational force of the second output shaft to another end portion of the connection shaft; a first power transmission mechanism that transmits the rotational force of the connection shaft to one end portion of the axle; a second power transmission mechanism that transmits the rotational force of the connection shaft to another end portion of the axle; a first slide mechanism that allows one end portion of the axle to be moved along an extending direction of the first output shaft, while maintaining transmission of the rotational force by the first power transmission mechanism; a second slide mechanism that allows the other end portion of the axle to be moved along an extending direction of the second output shaft, while maintaining transmission of the rotational force by the first power transmission mechanism; a first elastic member that elastically supports one end portion of the axle; and a second elastic member that elastically supports the other end portion of the axle, a rotational axial center of the wheel along a vertical direction intersecting an axial center direction of the axle being arranged shifted in a horizontal direction orthogonal to the axial center direction of the axle with respect to an axial center of the pivot shaft.

As a desirable embodiment of the drive wheel, the first output shaft and the second output shaft are arranged on both sides in an axial center direction of the connection shaft.

As a desirable embodiment of the drive wheel, the first power conversion mechanism and the second power conversion mechanism are arranged on both sides in the axial center direction of the connection shaft.

As a desirable embodiment of the drive wheel, the first power conversion mechanism and the second power conversion mechanism are arranged on an upper side in a vertical direction intersecting the axial center direction of the connection shaft.

As a desirable embodiment of the drive wheel, the first power conversion mechanism transmits the rotational force of the first output shaft to one end portion of the connection shaft the axial center direction of which is different from that of the first output shaft, and to which one of a bevel gear mechanism, a helical gear mechanism, a worm gear mechanism, a crown gear mechanism, and a universal joint mechanism is applied, and the second power conversion mechanism transmits the rotational force of the second output shaft to one end portion of the connection shaft the axial center direction of which is different from that of the second output shaft, and to which one of a bevel gear mechanism, a helical gear mechanism, a worm gear mechanism, a crown gear mechanism, and a universal joint mechanism is applied.

As a desirable embodiment of the drive wheel, the pivot shaft is coaxially disposed with the first input shaft and the second input shaft.

To achieve the above object, a cart according to an embodiment of the present disclosure, comprising: the drive wheel above, and a main body to which the drive wheel is fitted.

Advantageous Effects of Invention

With the present disclosure, it is possible to improve the running performance.

Brief Description of Drawings

FIG. 1 is a perspective view illustrating a basic configuration example of a drive wheel of a first embodiment.

FIG. 2 is a front view illustrating the drive wheel of the first embodiment.

FIG. 3 is a side view illustrating the drive wheel of the first embodiment.

FIG. 4 is a sectional view cut along a line A-A in FIG. 2.

FIG. 5 is a sectional view cut along a line B-B in FIG. 4.

FIG. 6 is a sectional view cut along a line C-C in FIG. 4.

FIG. 7 is a schematic view illustrating a driving force transmission passage of the drive wheel of the first embodiment.

FIG. 8 is a partial perspective view illustrating a configuration example of the drive wheel of the first embodiment.

FIG. 9 is a longitudinal sectional view of the drive wheel in FIG. 8.

FIG. 10 is a longitudinal sectional view illustrating an operation of the drive wheel in FIG. 8.

FIG. 11 is a longitudinal sectional view illustrating another configuration example of the drive wheel of the first embodiment.

FIG. 12 is a partial perspective view illustrating an example of the power conversion mechanism.

FIG. 13 is a partial perspective view illustrating an example of the power conversion mechanism.

FIG. 14 is a partial perspective view illustrating an example of the power conversion mechanism.

FIG. 15 is a partial front view illustrating an example of the power conversion mechanism.

FIG. 16 is a schematic diagram illustrating a configuration example of a cart of the first embodiment.

FIG. 17 is a perspective view illustrating a configuration example of a drive wheel of a second embodiment.

FIG. 18 is a schematic view illustrating the drive wheel of the second embodiment.

FIG. 19 is a perspective view illustrating the drive wheel of the second embodiment.

FIG. 20 is a perspective view illustrating the drive wheel of the second embodiment.

FIG. 21 is a side view illustrating another configuration example of the drive wheel of the second embodiment.

FIG. 22 is a side view illustrating another configuration example of the drive wheel of the second embodiment.

Description of Embodiments

Hereinafter, a preferred embodiment of a drive wheel and a cart according to the present disclosure will be described in detail with reference to the accompanying drawings. However, the present invention is not limited to the embodiment, and when there are a plurality of embodiments, the embodiments may be combined with each other. Moreover, components in the embodiments include components that can be easily assumed by those skilled in the art, components that are substantially the same, and components within a so-called range of equivalents.

First Embodiment

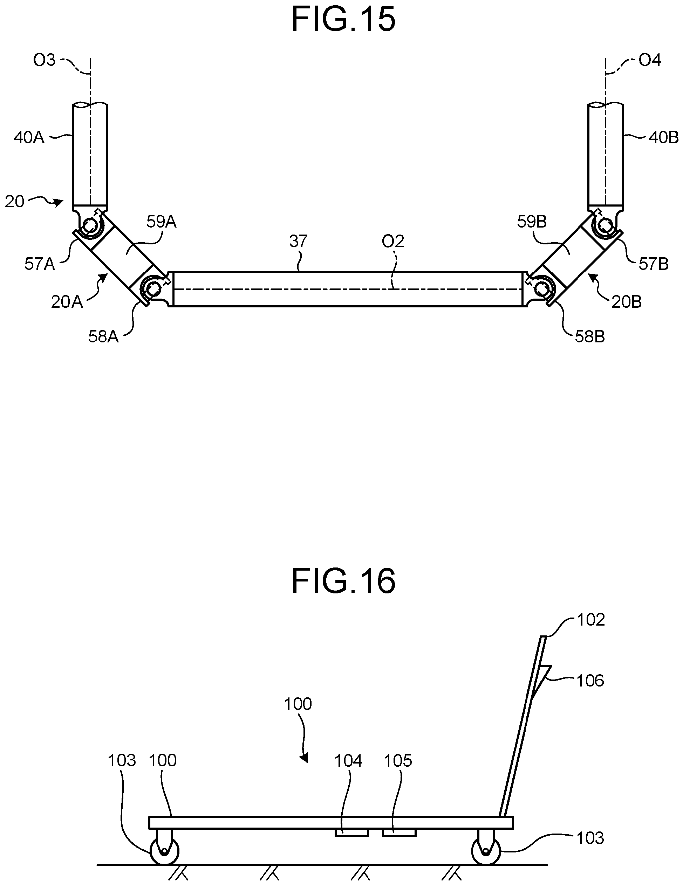

FIG. 16 is a schematic diagram illustrating a basic configuration example of a cart of a first embodiment.

In the first embodiment, as illustrated in FIG. 16, a cart 100 includes a cart main body 100A, a handle part 102, four drive wheels 103, a power supply unit 104, a control device 105, and an operation unit 106.

For example, the cart main body 100A is a flat plate material, and formed in a rectangular shape in a plan view. The handle part 102 is fixed to one side of the cart main body 100A in the longitudinal direction. The four drive wheels 103 are attached to four corners of the cart main body 100A on the back surface side. The four drive wheels 103 can be rotated and steered. Moreover, the power supply unit 104 and the control device 105 are attached to the back surface of the cart main body 100A between the front and back drive wheels 103, and the operation unit 106 is attached to the handle part 102. The control device 105 includes a computer system. The computer system includes a processor such as a CPU, and a memory such as a ROM or a RAM.

Thus, in the cart 100, the control device 105 to which an operation signal from the operation unit 106 is input, controls the drive wheels 103. Consequently, the cart 100 can travel and turn automatically. The operation unit 106 may not be provided on the cart 100 (handle part 102), and may also be configured as a remote control device away from the cart 100. Consequently, the cart 100 can be controlled remotely by wire or wireless.

Because the cart main body 100A is formed in a flat surface, an object to be transported can be placed on the flat surface. That is, the cart 100 can be configured as an Automatic Guided Vehicle (AGV). Moreover, the cart 100 may be configured as equipment that travels by placing an instrument along the flat surface of the cart main body 100A. For example, the equipment includes various types such as a hand lift, forklift, picking robot, and medical instrument.

In the cart 100 and equipment, the number and arrangement of the drive wheels 103 are not limited to the configuration described above. For example, in the cart 100 and equipment with four wheels as described above, a pair of the drive wheels 103 may be fitted to the front side of the cart 100, and driven wheels (single-axis driven wheels that do not turn) may be fitted to the rear side of the cart 100. Moreover, although not illustrated in the drawing, in the cart 100 and equipment with three wheels or more, there may be only one drive wheel 103, and all other wheels may be driven wheels. Furthermore, although not illustrated in the drawing, in the cart 100 and equipment with three wheels or more, all of the wheels may be the drive wheels 103 and there may not be a driven wheel. That is, in the cart 100 and equipment with three wheels or more, there may be at least one drive wheel 103.

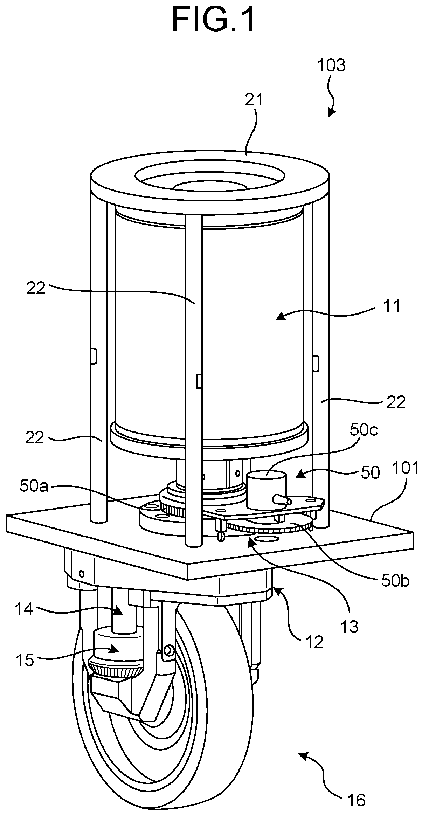

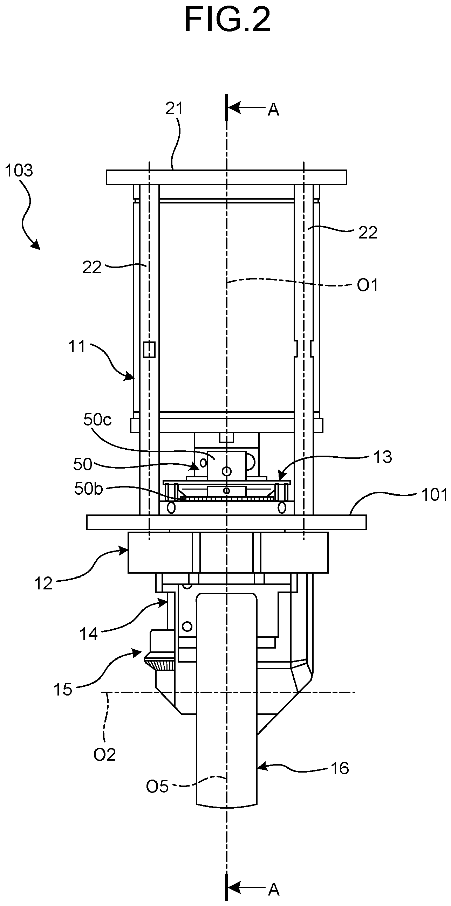

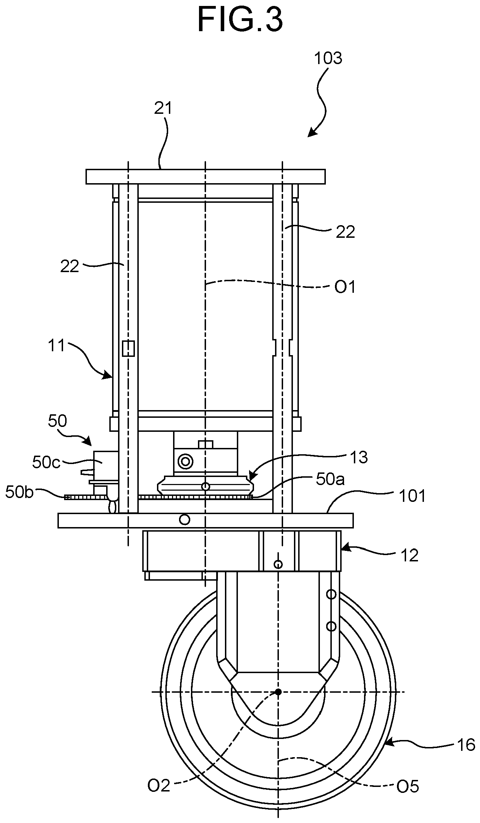

Hereinafter, the drive wheel 103 will be described in detail. FIG. 1 is a perspective view illustrating a basic configuration example of a drive wheel of the first embodiment. FIG. 2 is a front view illustrating the drive wheel of the first embodiment. FIG. 3 is a side view illustrating the drive wheel of the first embodiment.

As illustrated in FIG. 1 through FIG. 3, the drive wheel 103 includes an input unit 11, a turning part 12, a spur gear mechanism (transmission mechanism) 13, an output unit 14, a bevel gear mechanism 15 serving as a power conversion mechanism, and a wheel 16.

The input unit 11 is arranged above a main body 101. The upper end portion of the input unit 11 is fixed to a substrate 21, and the substrate 21 is supported onto the main body 101 by a plurality (four in this example) of support columns 22. The lower portion of the input unit 11 extends downward through the main body 101. The turning part 12 is arranged outside the lower portion of the input unit 11, and the lower portion shifted in the horizontal direction extends downward through the main body 101. The spur gear mechanism 13 transmits the rotational force of the input unit 11. The output unit 14 is rotated by the rotational force input from the input unit 11. The bevel gear mechanism 15 transmits the rotational force of the output unit 14 to the wheel 16. The wheel 16 can be rotated by the input rotational force and can be steered.

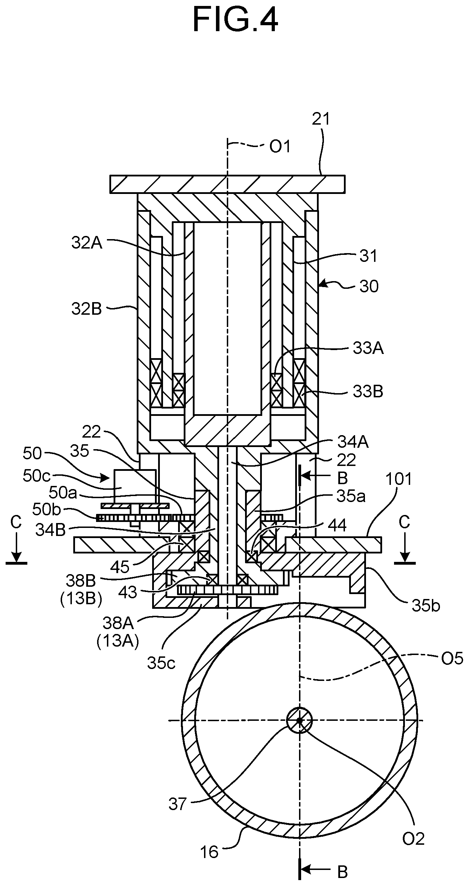

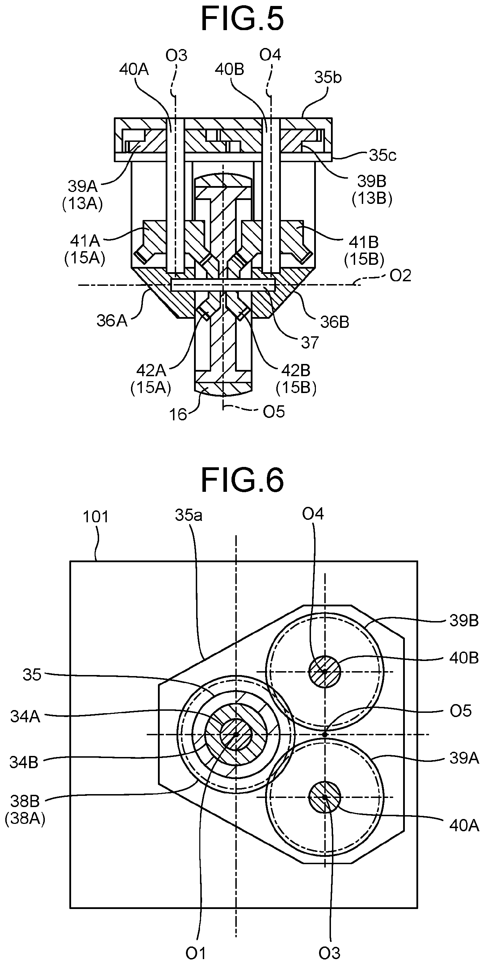

Hereinafter, the input unit 11, the turning part 12, the spur gear mechanism 13, the output unit 14, the bevel gear mechanism 15, and the wheel 16 will be described in detail. FIG. 4 is a sectional view cut along a line A-A in FIG. 2. FIG. 5 is a sectional view cut along a line B-B in FIG. 4. FIG. 6 is a sectional view cut along a line C-C in FIG. 4.

As illustrated in FIG. 4 through FIG. 6, the input unit 11 includes a dual shaft integrated motor 30, and can supply two rotational forces to the pivot center of the wheel 16. That is, a support cylinder 31 formed in a cylindrical shape is fixed to the lower portion of the substrate 21. A first rotating cylinder 32A is rotatably supported by the inside of the support cylinder 31 by a bearing 33A around an axial center O1. A second rotating cylinder 32B is rotatably supported by the outside by a bearing 33B around the axial center O1. A coil (not illustrated) is provided on the inner peripheral surface and outer peripheral surface of the support cylinder 31. A magnet (not illustrated) is provided on the outer peripheral surface of the first rotating cylinder 32A, and a first input shaft 34A that extends along the axial center O1 direction is provided on the lower portion. A magnet (not illustrated) is provided on the inner peripheral surface of the second rotating cylinder 32B, and a second input shaft 34B that extends along the axial center O1 direction is provided on the lower portion. The second input shaft 34B is formed in a cylindrical shape, and is arranged outside the first input shaft 34A. The first input shaft 34A and the second input shaft 34B extend downward through the main body 101. The input unit 11 includes the motor 30 having the support cylinder 31, the first rotating cylinder 32A, and the second rotating cylinder 32B, and includes the first input shaft 34A and the second input shaft 34B. Therefore, when each coil in the support cylinder 31 is energized, the first input shaft 34A can be rotated via the first rotating cylinder 32A, and the second input shaft 34B can be rotated via the second rotating cylinder 32B. On the other hand, when each coil in the support cylinder 31 is not energized, the first rotating cylinder 32A and the first input shaft 34A are rotatable with respect to the support cylinder 31, and the second rotating cylinder 32B and the second input shaft 34B are rotatable with respect to the support cylinder 31. A pivot shaft 35 is arranged outside the second input shaft 34B.

The pivot shaft 35 is formed in a cylindrical shape, is arranged outside the second input shaft 34B, extends along the axial center O1 direction, and is rotatably supported around the axial center O1. That is, the first input shaft 34A, the second input shaft 34B, and the pivot shaft 35 are coaxially and rotatably disposed along the axial center O1. A bearing 43 is provided between the first input shaft 34A and the second input shaft 34B, a bearing 44 is provided between the second input shaft 34B and the pivot shaft 35, and a bearing 45 is provided between the pivot shaft 35 and the main body 101. The pivot shaft 35 includes a main body 35a formed in a cylindrical shape and a flange part 35b integrally provided on the lower portion of the main body 35a. A cover member 35c is provided on the lower portion of the flange part 35b. In the pivot shaft 35, a first support member 36A and a second support member 36B are provided on the lower portion of the cover member 35c and on both sides of the wheel 16 in the horizontal direction so as to extend downward. In the wheel 16, an axle 37 along an axial center O2 direction orthogonal to the axial center O1 direction is integrally provided on a position shifted from the center in the horizontal direction. In the axle 37, one end portion along the axial center O2 direction is rotatably supported by the lower portion of the first support member 36A, and the other end portion along the axial center O2 direction is rotatably supported by the lower portion of the second support member 36B. The turning part 12 includes the pivot shaft 35, the first support member 36A, and the second support member 36B. Therefore, a rotational axial center 31 of the wheel 16 along the vertical direction intersecting the axial center O2 direction of the axle 37, is arranged shifted in the horizontal direction orthogonal to the axial center O2 direction of the axle 37 with respect to the axial center O1 of the pivot shaft 35.

A first drive spur gear 38A is fixed to the lower end portion of the first input shaft 34A, and a second drive spur gear 38B is fixed to the lower end portion of the second input shaft 34B. The first drive spur gear 38A meshes with a first driven spur gear 39A, and the second drive spur gear 38B meshes with a second driven spur gear 39B. The second drive spur gear 38B and the first drive spur gear 38A are stacked vertically and rotate around the axial center O1. The first driven spur gear 39A is fixed to the upper portion of a first output shaft 40A. The upper portion of the first output shaft 40A is supported through the flange part 35b and the cover member 35c of the pivot shaft 35, and the lower portion of the first output shaft 40A is supported by the first support member 36A. The first output shaft 40A is rotatably supported around an axial center O3. The second driven spur gear 39B is fixed to the upper portion of a second output shaft 40B. The upper portion of the second output shaft 40B is supported through the flange part 35b and the cover member 35c of the pivot shaft 35, and the lower portion of the second output shaft 40B is supported by the second support member 36B. The second output shaft 40B is rotatably supported around an axial center O4. The axial center O3 and the axial center O4 are parallel to the axial center O1. In this example, the first drive spur gear 38A, the second drive spur gear 38B, the first driven spur gear 39A, and the second driven spur gear 39B are covered by the pivot shaft 35 and the cover member 35c.

The first driven spur gear 39A, the first drive spur gear 38A, the second drive spur gear 38B, and the second driven spur gear 39B are arranged such that the axial center O1, the axial center 03, and the axial center O4 form a triangle. That is, the rotational axial center O5 of the wheel 16 is arranged shifted in the horizontal direction orthogonal to the axial center O2 direction of the axle 37 with respect to the axial center O1 of the pivot shaft 35. Then, the first driven spur gear 39A and the first output shaft 40A, and the second driven spur gear 39B and the second output shaft 40B are arranged on both sides in the axial center O2 direction of the axle 37 with respect to the wheel 16. The pitch circle diameter, the tooth form, the number of teeth, and the like of the spur gears 38A, 38B, 39A, and 39B are the same. However, the pitch circle diameter, the tooth form, the number of teeth, and the like of the spur gears 38A, 38B, 39A, and 39B may also be different from each other. For example, the drive spur gears 38A and 38B, and the driven spur gears 39A and 39B may be formed in different shapes. The spur gear mechanism 13 includes a first spur gear mechanism (first transmission mechanism) 13A and a second spur gear mechanism (second transmission mechanism) 13B. The first spur gear mechanism 13A includes the first drive spur gear 38A and the first driven spur gear 39A. The second spur gear mechanism 13B includes the second drive spur gear 38B and the second driven spur gear 39B. Moreover, the output unit 14 includes the first output shaft 40A and the second output shaft 40B.

A first drive bevel gear 41A is fixed to the lower portion of the first output shaft 40A, and a second drive bevel gear 41B is fixed to the lower portion of the second output shaft 40B. On the other hand, in the axle 37, a first driven bevel gear 42A is fixed to one end portion in the axial center O2 direction, and a second driven bevel gear 42B is fixed to the other end portion in the axial center O2 direction. The first drive bevel gear 41A meshes with the first driven bevel gear 42A. The second drive bevel gear 41B meshes with the second driven bevel gear 42B. The bevel gear mechanism 15 includes a first bevel gear mechanism 15A serving as a first power conversion mechanism, and a second bevel gear mechanism 15B serving as a second power conversion mechanism. The first bevel gear mechanism 15A includes the first drive bevel gear 41A and the first driven bevel gear 42A. The second bevel gear mechanism 15B includes the second drive bevel gear 41B and the second driven bevel gear 42B.

The drive wheel 103 can rotate and steer the wheel 16 by rotating the first input shaft 34A and the second input shaft 34B by the motor 30 via the first rotating cylinder 32A and the second rotating cylinder 32B. That is, the wheel 16 can be rotated without steering, by rotating the first input shaft 34A and rotating the second input shaft 34B in the opposite direction of the first input shaft 34A, and by setting the rotational frequencies (rotational speed) of the first input shaft 34A and the second input shaft 34B to be the same. In this process, by setting the rotational frequency (rotational speed) of the first input shaft 34A and the second input shaft 34B different from each other, it is possible to steer the wheel 16 in a rotating state or in a stopped state.

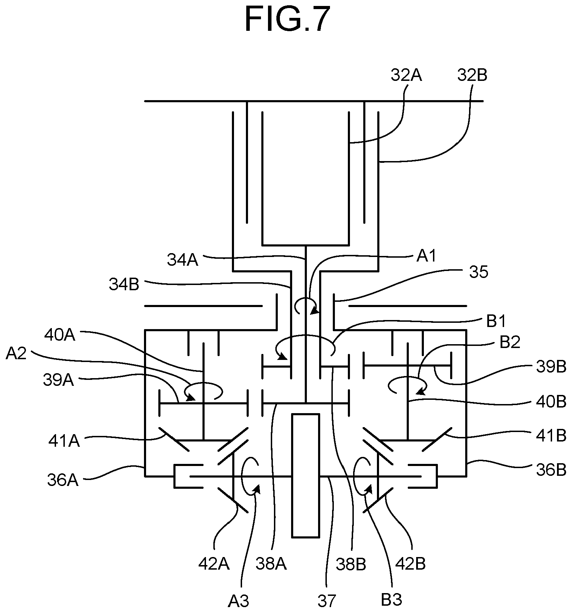

An operation of the drive wheel 103 will now be explained. FIG. 7 is a schematic view illustrating a driving force transmission passage of the drive wheel.

In the drive wheel 103, as illustrated in FIG. 7, when the first input shaft 34A is rotated in a first direction A1, the first drive spur gear 38A is rotated in the same direction, and rotates the first driven spur gear 39A meshing with the first drive spur gear 38A in a second direction A2. When the first driven spur gear 39A is rotated in the second direction A2, the first drive bevel gear 41A integrally provided with the first driven spur gear 39A via the first output shaft 40A rotates in the same direction. Then, the first driven bevel gear 42A meshing with the first drive bevel gear 41A is rotated in a third direction A3, and causes the axle 37 integrated with the first driven bevel gear 42A to rotate in the same direction. On the other hand, when the second input shaft 34B is rotated in a first direction B1 that is opposite from the first direction A1, the second drive spur gear 38B is rotated in the same direction, and rotates the second driven spur gear 39B meshing with the second drive spur gear 38B in a second direction B2. When the second driven spur gear 39B is rotated in the second direction B2, the second drive bevel gear 41B integrally provided with the second driven spur gear 39B via the second output shaft 40B rotates in the same direction. Then, the second driven bevel gear 42B meshing with the second drive bevel gear 41B is rotated in a third direction B3, and causes the axle 37 integrated with the second driven bevel gear 42B to rotate in the same direction. In this example, the third direction A3 and the third direction B3 are in the same rotation direction. Hence, if the rotational frequencies of the first input shaft 34A and the second input shaft 34B are the same, the wheel 16 rotates without turning.

In this process, if the rotational frequency of the second input shaft 34B is reduced than the rotational frequency of the first input shaft 34A, the rotational frequency input to the axle 37 from the second drive bevel gear 41B via the second driven bevel gear 42B becomes lower than the rotational frequency input to the axle 37 from the first drive bevel gear 41A via the first driven bevel gear 42A. Then, the pivot shaft 35 is rotated by the difference in the rotational frequencies, and the wheel 16 is steered to turn. Moreover, when the rotation of the second input shaft 34B is stopped, the rotational frequency input to the axle 37 from the second drive bevel gear 41B via the second driven bevel gear 42B becomes zero, and the wheel 16 is steered to turn without rotating.

That is, when the gear ratios of the spur gears 38A, 38B, 39A, and 39B are the same and the gear ratios of the bevel gears 41A, 41B, 42A, and 42B are the same, and when the rotational frequency of the first input shaft 34A is NA, the rotational frequency of the second input shaft 34B is NB, the rotational frequency of the pivot shaft 35 is NS, and the rotational frequency of the wheel 16 is NW, the rotational frequency NS of the pivot shaft 35 and the rotational frequency NW of the wheel 16 satisfy the relations of the following formulae.

$$NW = (1/2)NA - (1/2)NB$$

$$NS = -(1/2)NA - (1/2)NB$$

$$NA = NW - NS$$

$$NB = -NW - NS$$

As illustrated in FIG. 1 through FIG. 4, the drive wheel 103 of the first embodiment includes a turning position detection unit 50. The turning position detection unit 50 is provided on the upper surface of the main body 101. The turning position detection unit 50 includes a first spur gear 50a that rotates around the axial center O1 with the pivot shaft 35, a second spur gear 50b that meshes with the first spur gear 50a and that is driven to rotate around an axial center parallel to the axial center O1, and a detector 50c that detects the rotational position of the second spur gear 50b. Thus, when the first spur gear 50a rotates with the pivot shaft 35, and when the detector 50c detects the rotational position of the first spur gear 50a as the rotational position of the second spur gear 50b, it is possible to detect the rotational position of the pivot shaft 35, that is, the rotational position of the turning part 12 with respect to the main body 101. The detection signal of the detector 50c is input to the control device 105 of the cart (equipment) 100. As a result, the control device 105 can control the turning of the drive wheel 103 of the present embodiment.

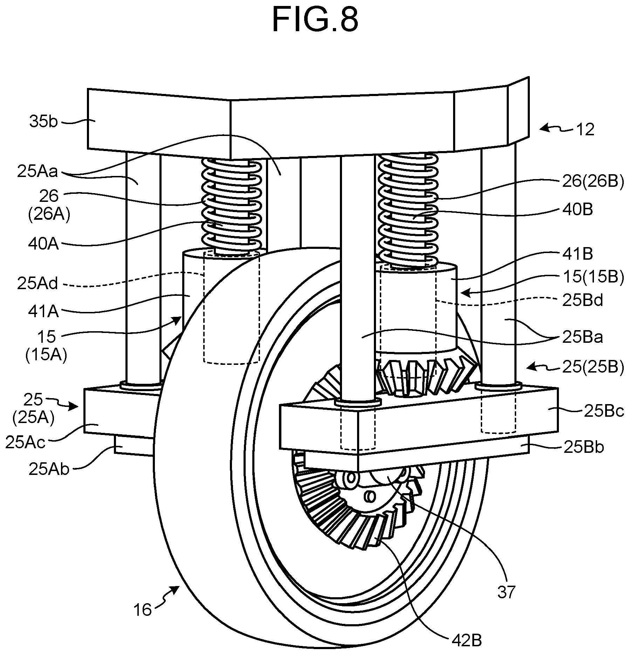

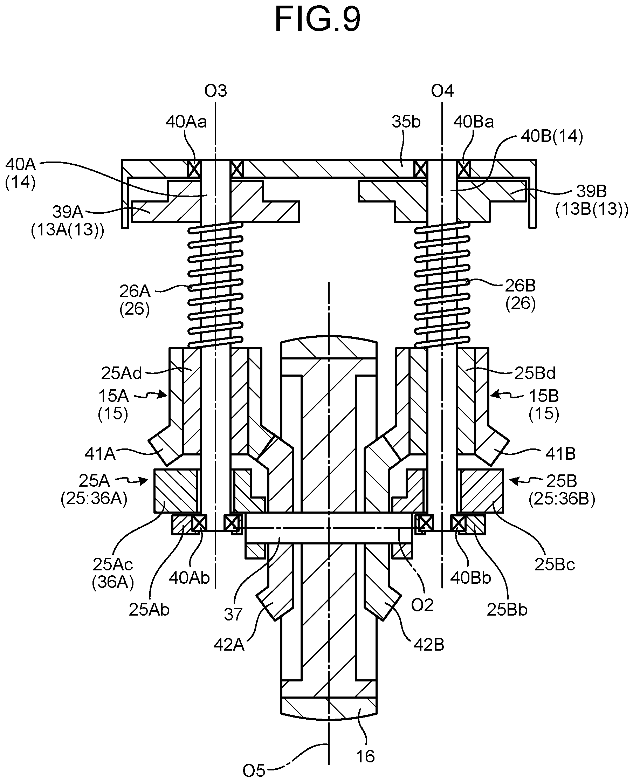

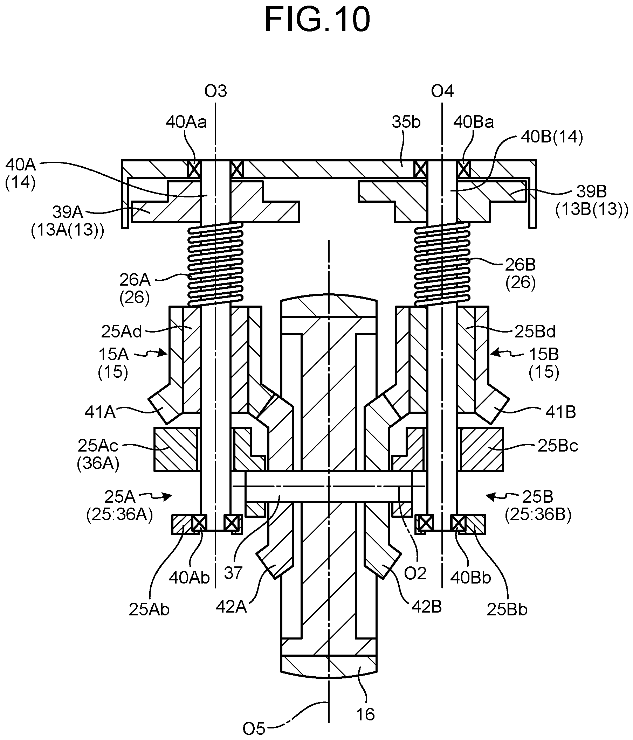

FIG. 8 is a partial perspective view illustrating a configuration example of the drive wheel of the first embodiment. FIG. 9 is a longitudinal sectional view of the drive wheel in FIG. 8. FIG. 10 is a longitudinal sectional view illustrating an operation of the drive wheel in FIG. 8.

The drive wheel 103 of the first embodiment further includes a slide mechanism 25 and an elastic member 26 in addition to the configuration described above.

The slide mechanism 25 includes a first slide mechanism 25A and a second slide mechanism 25B. The first slide mechanism 25A allows one end portion of the axle 37 to be moved along the extending direction of the first output shaft 40A, while maintaining transmission of the rotational force to the one end portion of the axle 37. The first slide mechanism 25A changes the configuration of the first support member 36A, and includes a first slide shaft 25Aa, a first fixed portion 25Ab, a first slider 25Ac, and a first spline bearing 25Ad. The second slide mechanism 25B allows the other end portion of the axle 37 to be moved along the extending direction of the second output shaft 40B, while maintaining transmission of the rotational force to the other end portion of the axle 37. The second slide mechanism 25B changes the configuration of the second support member 36B, and includes a second slide shaft 25Ba, a second fixed portion 25Bb, a second slider 25Bc, and a second spline bearing 25Bd.

In the first slide mechanism 25A, the first slide shaft 25Aa extends along the axial center O3 so as to be parallel to the axial center O3 of the first output shaft 40A. A pair of the first slide shafts 25Aa are provided on one side of the wheel 16, and the upper end of each of the first slide shafts 25Aa is fixed to the flange part 35b of the pivot shaft 35. The first fixed portion 25Ab is fixed to the lower end of each first slide shaft 25Aa. In the first fixed portion 25Ab, the lower end of the first output shaft 40A is rotatably supported by a bearing 40Ab. The upper end of the first output shaft 40A is rotatably supported by a bearing 40Aa with respect to the flange part 35b. Each first slide shaft 25Aa penetrates through the first slider 25Ac, and the first slider 25Ac is movable in the vertical direction that is the extending direction of each first slide shaft 25Aa (extending direction of the axial center O3 of the first output shaft 40A). In the first slider 25Ac, one end portion of the axle 37 is rotatably supported around the axial center O2 with the first driven bevel gear 42A. The first spline bearing 25Ad is integrally fixed to the first drive bevel gear 41A, and through which the first output shaft 40A penetrates. The first spline bearing 25Ad rotates with the first output shaft 40A, and is movable in the vertical direction along the extending direction of the axial center O3 of the first output shaft 40A. Thus, the first spline bearing 25Ad meshes with the first output shaft 40A in the rotation direction of the first output shaft 40A, and is freely movable in the extending direction of the first output shaft 40A. Therefore, the first output shaft 40A is configured as a first spline shaft. Consequently, the first slide mechanism 25A maintains the rotation of the first output shaft 40A and the first drive bevel gear 41A, via the first spline bearing 25Ad and the bearing 40Ab of the first fixed portion 25Ab. Moreover, the first slide mechanism 25A movably guides the one end portion of the axle 37, the first driven bevel gear 42A, the first spline bearing 25Ad, and the first drive bevel gear 41A along the extending direction of the first output shaft 40A, via the first slide shaft 25Aa and the first slider 25Ac. As a result, the first slide mechanism 25A allows one end portion of the axle 37 to be moved along the extending direction of the first output shaft 40A, while maintaining transmission of the rotational force to the one end portion of the axle 37.

In the second slide mechanism 25B, the second slide shaft 25Ba extends along the axial center O4 so as to be parallel to the axial center O4 of the second output shaft 40B. A pair of the second slide shafts 25Ba are provided on one side of the wheel 16, and the upper end of each of the second slide shafts 25Ba is fixed to the flange part 35b of the pivot shaft 35. The second fixed portion 25Bb is fixed to the lower end of each second slide shaft 25Ba. In the second fixed portion 25Bb, the lower end of the second output shaft 40B is rotatably supported by a bearing 40Bb. The upper end of the second output shaft 40B is rotatably supported by a bearing 40Ba with respect to the flange part 35b. Each second slide shaft 25Ba penetrates through the second slider 25Bc, and the second slider 25Bc is movable in the vertical direction that is the extending direction of each second slide shaft 25Ba (extending direction of the axial center O3 of the second output shaft 40B). In the second slider 25Bc, one end portion of the axle 37 is rotatably supported around the axial center O2 with the second driven bevel gear 42B. The second spline bearing 25Bd is integrally fixed to the second drive bevel gear 41B, and through which the second output shaft 40B penetrates. The second spline bearing 25Bd rotates with the second output shaft 40B, and is movable in the vertical direction along the extending direction of the axial center O3 of the second output shaft 40B. Thus, the second spline bearing 25Bd meshes with the second output shaft 40B in the rotation direction of the second output shaft 40B, and is freely movable in the extending direction of the second output shaft 40B. Therefore, the second output shaft 40B is configured as a second spline shaft. Consequently, the second slide mechanism 25B maintains the rotation of the second output shaft 40B and the second drive bevel gear 41B, via the second spline bearing 25Bd and the bearing 40Bb of the second fixed portion 25Bb. Moreover, the second slide mechanism 25B movably guides the one end portion of the axle 37, the second driven bevel gear 42B, the second spline bearing 25Bd, and the second drive bevel gear 41B along the extending direction of the second output shaft 40B, via the second slide shaft 25Ba and the second slider 25Bc. As a result, the second slide mechanism 25B allows one end portion of the axle 37 to be moved along the extending direction of the second output shaft 40B, while maintaining transmission of the rotational force to the one end portion of the axle 37.

The elastic member 26 includes a first elastic member 26A and a second elastic member 26B.

The first elastic member 26A is configured as a compression coil spring, and through which the first output shaft 40A passes. The first elastic member 26A is disposed between the first driven spur gear 39A fixed to the first output shaft 40A and the first spline bearing 25Ad (or first drive bevel gear 41A) provided on the first output shaft 40A. Thus, the first elastic member 26A elastically supports the movement of one end portion of the axle 37, the first driven bevel gear 42A, the first spline bearing 25Ad, and the first drive bevel gear 41A in the first slide mechanism 25A, by applying elastic force.

The second elastic member 26B is configured as a compression coil spring, and through which the second output shaft 40B passes. The second elastic member 26B is disposed between the second driven spur gear 39B fixed to the second output shaft 40B and the second spline bearing 25Bd (or second drive bevel gear 41B) provided on the second output shaft 40B. Thus, the second elastic member 26B elastically supports the movement of one end portion of the axle 37, the second driven bevel gear 42B, the second spline bearing 25Bd, and the second drive bevel gear 41B in the second slide mechanism 25B, by applying elastic force.

Thus, the elastic member 26 elastically supports the movement of the axle 37 by the first slide mechanism 25A and the second slide mechanism 25B of the slide mechanism 25, by applying elastic force.

In this manner, the drive wheel 103 includes the first input shaft 34A and the second input shaft 34B coaxially disposed, the first output shaft 40A and the second output shaft 40B disposed on different axes, the first spur gear mechanism 13A that transmits the rotational force of the first input shaft 34A to the first output shaft 40A, the second spur gear mechanism 13B that transmits the rotational force of the second input shaft 34B to the second output shaft 40B, the wheel 16 connected to the axle 37, the pivot shaft 35 that supports the wheel 16 in a pivotable manner via the axle 37, the first bevel gear mechanism 15A that transmits the rotational force of the first output shaft 40A to one end portion of the axle 37, and the second bevel gear mechanism 15B that transmits the rotational force of the second output shaft 40B to the other end portion of the axle 37.

Therefore, in the drive wheel 103, the rotational force of the first input shaft 34A and the second input shaft 34B is transmitted to the first output shaft 40A and the second output shaft 40B via the first spur gear mechanism 13A and the second spur gear mechanism 13B, and is transmitted to the end portions of the axle 37 from the first output shaft 40A and the second output shaft 40B via the first bevel gear mechanism 15A and the second bevel gear mechanism 15B. In this example, in the drive wheel 103, it is possible to switch the rotation and steering of the wheel 16, by adjusting the rotational frequency of the first input shaft 34A and the second input shaft 34B. Therefore, in the drive wheel 103, because the bevel gear mechanisms 15A and 15B are arranged on each end portion of the axle 37, the transmission system of the rotational force to the wheel 16 is simplified. Hence, it is possible to simplify the structure and ensure a sufficient minimum ground clearance.

Moreover, in the drive wheel 103, the rotational axial center O5 of the wheel 16 along the vertical direction intersecting the axial center O2 of the axle 37 is arranged shifted in the horizontal direction orthogonal to the axial center O2 of the axle 37 with respect to the axial center O1 of the pivot shaft 35. Therefore, in the drive wheel 103, when the wheel 16 is not driven, it is possible to passively turn the wheel 16 by the external force applied from the horizontal direction. That is, not only the cart 100 can be driven automatically and steered automatically, but the operator can also manually drive and manually steer the cart 100.

Also, the drive wheel 103 of the first embodiment includes the first slide mechanism 25A that allows one end portion of the axle 37 to be moved along the extending direction of the first output shaft 40A, while maintaining transmission of the rotational force to the one end portion of the axle 37; the second slide mechanism 25B that allows the other end portion of the axle 37 to be moved along the extending direction of the second output shaft 40B, while maintaining transmission of the rotational force to the other end portion of the axle 37; and the elastic member 26 that elastically supports the axle 37.

Therefore, the rotational force of the first output shaft 40A and the second output shaft 40B is transmitted to the wheel 16 connected to the axle 37, and the wheel 16 connected to the axle 37 is movably provided in the extending direction of the first output shaft 40A and the second output shaft 40B, while being elastically supported by the first elastic member 26A and the second elastic member 26B. Therefore, even if there are ups and downs or obstacles such as trash or pebbles on the ground surface (floor surface), it is possible to travel the ups and downs and over the obstacles with elasticity, and improve the running performance.

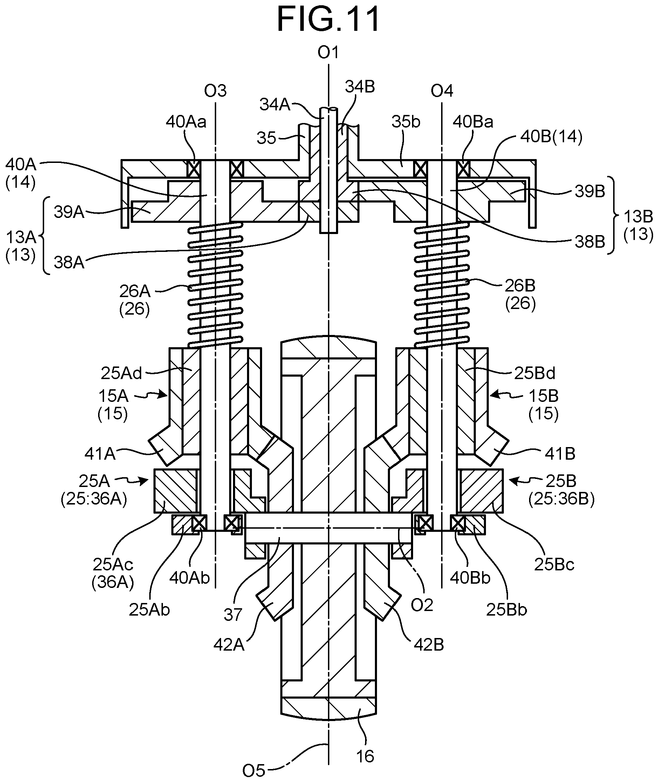

In this example, FIG. 11 is a longitudinal sectional view illustrating another configuration example of the drive wheel of the first embodiment. In the drive wheel 103 illustrated in FIG. 11, the rotational axial center O5 of the wheel 16 along the vertical direction intersecting the axial center O2 of the axle 37 matches with the axial center O1 of the pivot shaft 35. Then, similar to the configuration illustrated in FIG. 8 through FIG. 10, the drive wheel 103 illustrated in FIG. 11 includes the first slide mechanism 25A that allows one end portion of the axle 37 to be moved along the extending direction of the first output shaft 40A, while maintaining transmission of the rotational force to the one end portion of the axle 37; the second slide mechanism 25B that allows the other end portion of the axle 37 to be moved along the extending direction of the second output shaft 40B, while maintaining transmission of the rotational force to the other end portion of the axle 37; and the elastic member 26 that elastically supports the axle 37.

Thus, in the drive wheel 103 illustrated in FIG. 11 also, the rotational force of the first output shaft 40A and the second output shaft 40B is transmitted to the wheel 16 connected to the axle 37, and the wheel 16 connected to the axle 37 is movably provided in the extending direction of the first output shaft 40A and the second output shaft 40B, while being elastically supported by the first elastic member 26A and the second elastic member 26B. Therefore, even if there are ups and downs or obstacles such as trash or pebbles on the ground surface (floor surface), it is possible to travel the ups and downs and over the obstacles with elasticity, and improve the running performance.

Moreover, in the drive wheel 103 of the first embodiment, the elastic member 26 includes the first elastic member 26A that elastically supports one end portion of the axle 37, and the second elastic member 26B that elastically supports the other end portion of the axle 37.

Therefore, by elastically supporting each end portion of the axle 37 by the first elastic member 26A and the second elastic member 26B, the inclination of the axial center O2 of the axle 37 is supported by applying elastic force. Hence, even if there are ups and downs or obstacles such as trash or pebbles on the ground surface (floor surface), it is possible to further improve the running performance for traveling the ups and downs or obstacles such as trash or pebbles with elasticity.

In the drive wheel 103 of the first embodiment, the first output shaft 40A and the second output shaft 40B are arranged on both sides in the axial center O2 direction of the axle 37 with respect to the wheel 16. Therefore, the rotational force is input from both sides in the axial center O2 direction of the axle 37. Hence, it is possible to simplify the differential mechanism for steering the wheel 16.

In the drive wheel 103 of the first embodiment, the first bevel gear mechanism 15A and the second bevel gear mechanism 15B are arranged on both sides in the axial center O2 direction of the axle 37 with respect to the wheel 16. Thus, the rotational force is input from both sides in the axial center O2 direction of the axle 37. Hence, it is possible to simplify the differential mechanism for steering the wheel 16.

In the drive wheel 103 of the first embodiment, the first bevel gear mechanism 15A and the second bevel gear mechanism 15B are arranged on the upper side in the vertical direction intersecting the axial center O2 direction of the axle 37. Thus, there is no need to arrange the bevel gear mechanisms 15A and 15B on both sides in the axial center O2 direction of the axle 37. Hence, it is possible to reduce the size of the differential mechanism.

In the drive wheel 103 of the first embodiment, the pivot shaft 35 is coaxially disposed with the first input shaft 34A and the second input shaft 34B. Therefore, it is possible to reduce the size and simplify the structure.

Moreover, the cart 100 of the first embodiment includes the drive wheel 103 and the main body 101 to which the drive wheel 103 is fitted. Therefore, it is possible to simplify the structure, and ensure a sufficient minimum ground clearance.

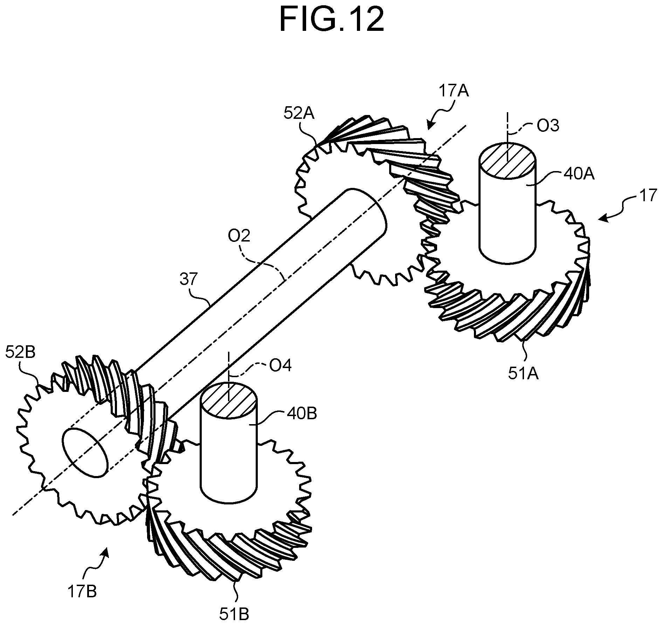

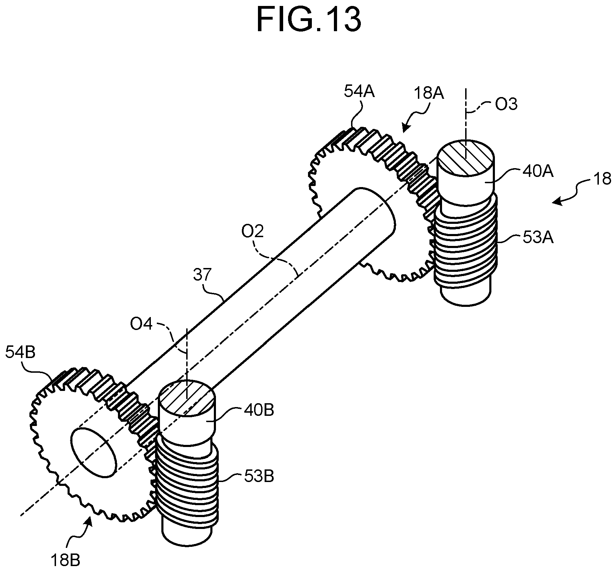

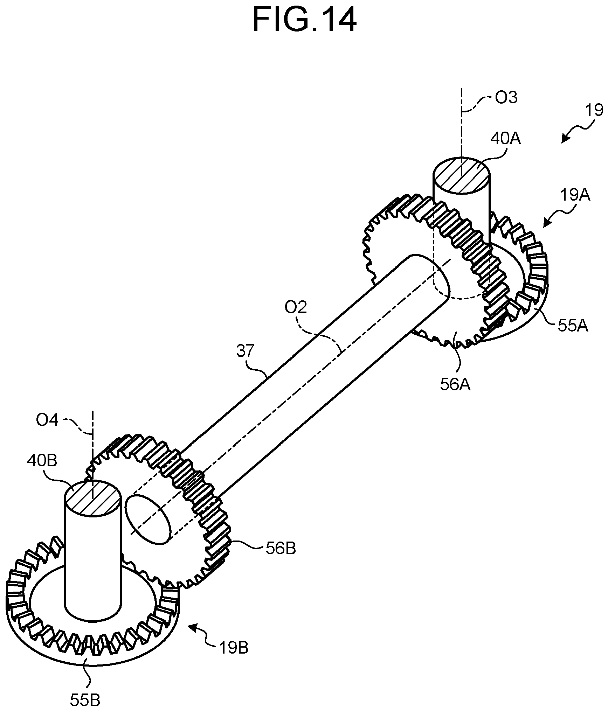

FIG. 12 is a partial perspective view illustrating an example of a power conversion mechanism. FIG. 13 is a partial perspective view illustrating an example of the power conversion mechanism. FIG. 14 is a partial perspective view illustrating an example of the power conversion mechanism. FIG. 15 is a partial front view illustrating an example of the power conversion mechanism.

As described above, the power conversion mechanism is the bevel gear mechanism 15 including the first bevel gear mechanism 15A and the second bevel gear mechanism 15B. However, it is not limited thereto.

FIG. 12 illustrates a helical gear mechanism 17 as an example of the power conversion mechanism used in place of the bevel gear mechanism 15. The helical gear mechanism 17 transmits the rotational force of the output unit 14 to the wheel 16. The helical gear mechanism 17 includes a first helical gear mechanism 17A serving as a first power conversion mechanism and a second helical gear mechanism 17B serving as a second power conversion mechanism. The first helical gear mechanism 17A includes a first drive helical gear 51A fixed to the lower portion of the first output shaft 40A, and a first driven helical gear 52A that is fixed to one end portion in the axial center O2 direction of the axle 37 provided on the wheel 16, and that meshes with the first drive helical gear 51A. The second helical gear mechanism 17B includes a second drive helical gear 51B fixed to the lower portion of the second output shaft 40B, and a second driven helical gear 52B that is fixed to the other end portion in the axial center O2 direction of the axle 37 and that meshes with the second drive helical gear 51B.

Then, as described above, the rotational force of the first input shaft 34A and the second input shaft 34B is transmitted to the first output shaft 40A and the second output shaft 40B via the first spur gear mechanism 13A and the second spur gear mechanism 13B, and is transmitted to the end portions of the axle 37 from the first output shaft 40A and the second output shaft 40B via the first helical gear mechanism 17A and the second helical gear mechanism 17B. In this example, it is possible to switch the rotation and steering of the wheel 16, by adjusting the rotational frequency of the first input shaft 34A and the second input shaft 34B. Therefore, because the helical gear mechanisms 17A and 17B are arranged on each end portion of the axle 37, the transmission system of the rotational force to the wheel 16 is simplified. Hence, it is possible to simplify the structure and ensure a sufficient minimum ground clearance.

FIG. 13 illustrates a worm gear mechanism 18 as an example of the power conversion mechanism used in place of the bevel gear mechanism 15. The worm gear mechanism 18 transmits the rotational force of the output unit 14 to the wheel 16. The worm gear mechanism 18 includes a first worm gear mechanism 18A serving as a first power conversion mechanism and a second worm gear mechanism 18B serving as a second power conversion mechanism. The first worm gear mechanism 18A includes a first worm 53A fixed to the lower portion of the first output shaft 40A, and a first worm wheel 54A that is fixed to one end portion in the axial center O2 direction of the axle 37 provided on the wheel 16, and that meshes with the first worm 53A. The second worm gear mechanism 18B includes a second worm 53B fixed to the lower portion of the second output shaft 40B, and a second worm wheel 54B that is fixed to the other end portion in the axial center O2 direction of the axle 37 and that meshes with the second worm 53B.

Then, as described above, the rotational force of the first input shaft 34A and the second input shaft 34B is transmitted to the first output shaft 40A and the second output shaft 40B via the first spur gear mechanism 13A and the second spur gear mechanism 13B, and is transmitted to the end portions of the axle 37 from the first output shaft 40A and the second output shaft 40B via the first worm gear mechanism 18A and the second worm gear mechanism 18B. In this example, it is possible to switch the rotation and steering of the wheel 16, by adjusting the rotational frequency of the first input shaft 34A and the second input shaft 34B. Therefore, because the worm gear mechanisms 18A and 18B are arranged on each end portion of the axle 37, the transmission system of the rotational force to the wheel 16 is simplified. Hence, it is possible to simplify the structure and ensure a sufficient minimum ground clearance.

The first worm gear mechanism 18A may also be configured such that the first worm wheel 54A is fixed to the lower portion of the first output shaft 40A, and the first worm 53A is fixed to one end portion in the axial center O2 direction of the axle 37. Moreover, the second worm gear mechanism 18B may also be configured such that the second worm wheel 54B is fixed to the lower portion of the second output shaft 40B, and the second worm 53B is fixed to the other end portion in the axial center O2 direction of the axle 37.

FIG. 14 illustrates a crown gear mechanism 19 as an example of the power conversion mechanism used in place of the bevel gear mechanism 15. The crown gear mechanism 19 transmits the rotational force of the output unit 14 to the wheel 16. The crown gear mechanism 19 includes a first crown gear mechanism 19A serving as a first power conversion mechanism, and a second crown gear mechanism 19B serving as a second power conversion mechanism. The first crown gear mechanism 19A includes a first crown gear 55A fixed to the lower portion of the first output shaft 40A, and a first spur gear 56A that is fixed to one end portion in the axial center O2 direction of the axle 37 provided on the wheel 16 and that meshes with the first crown gear 55A. The second crown gear mechanism 19B includes a second crown gear 55B fixed to the lower portion of the second output shaft 40B, and a second spur gear 56B that is fixed to the other end portion in the axial center O2 direction of the axle 37 and that meshes with the second crown gear 55B.

Then, as described above, the rotational force of the first input shaft 34A and the second input shaft 34B is transmitted to the first output shaft 40A and the second output shaft 40B via the first spur gear mechanism 13A and the second spur gear mechanism 13B, and is transmitted to the end portions of the axle 37 from the first output shaft 40A and the second output shaft 40B via the first crown gear mechanism 19A and the second crown gear mechanism 19B. In this example, it is possible to switch the rotation and steering of the wheel 16, by adjusting the rotational frequency of the first input shaft 34A and the second input shaft 34B. Therefore, because the crown gear mechanisms 19A and 19B are arranged on each end portion of the axle 37, the transmission system of the rotational force to the wheel 16 is simplified. Hence, it is possible to simplify the structure and ensure a sufficient minimum ground clearance.

The first crown gear mechanism 19A may also be configured such that the first spur gear 56A is fixed to the lower portion of the first output shaft 40A, and the first crown gear 55A is fixed to one end portion in the axial center O2 direction of the axle 37. Moreover, the second crown gear mechanism 19B may also be configured such that the second spur gear 56B is fixed to the lower portion of the second output shaft 40B, and the second crown gear 55B is fixed to the other end portion in the axial center O2 direction of the axle 37.

FIG. 15 illustrates a universal joint mechanism (universal joint mechanism) 20 as an example of the power conversion mechanism used in place of the bevel gear mechanism 15. The universal joint mechanism 20 transmits the rotational force of the output unit 14 to the wheel 16. The universal joint mechanism 20 includes a first universal joint mechanism 20A serving as a first power conversion mechanism and a second universal joint mechanism 20B serving as a second power conversion mechanism. The first universal joint mechanism 20A includes a first drive joint 57A fixed to the lower end of the first output shaft 40A, a first driven joint 58A fixed to one end in the axial center O2 direction of the axle 37 provided on the wheel 16, and a first connection part 59A that connects the first drive joint 57A and the first driven joint 58A. The second universal joint mechanism 20B includes a second drive joint 57B fixed to the lower end of the second output shaft 40B, a second driven joint 58B fixed to the other end in the axial center O2 direction of the axle 37, and a second connection part 59B that connects the second drive joint 57B and the second driven joint 58B. Although not illustrated in the drawing, in the first universal joint mechanism 20A, one end of the first connection part 59A is fixed to the lower end of the first output shaft 40A, the other end of the first connection part 59A is fixed to one end in the axial center O2 direction of the axle 37, and a single or a plurality of joints corresponding to the first drive joint 57A and the first driven joint 58A are provided in the intermediate portion. Similarly, although not illustrated in the drawing, in the second universal joint mechanism 20B, one end of the second connection part 59B is fixed to the lower end of the second output shaft 40B, the other end of the second connection part 59B is fixed to the other end in the axial center O2 direction of the axle 37, and a single or a plurality of joints corresponding to the second drive joint 57B and the second driven joint 58B are provided in the intermediate portion.

Then, as described above, the rotational force of the first input shaft 34A and the second input shaft 34B is transmitted to the first output shaft 40A and the second output shaft 40B via the first spur gear mechanism 13A and the second spur gear mechanism 13B, and is transmitted to the end portions of the axle 37 from the first output shaft 40A and the second output shaft 40B via the first universal joint mechanism 20A and the second universal joint mechanism 20B. In this example, it is possible to switch the rotation and steering of the wheel 16, by adjusting the rotational frequency of the first input shaft 34A and the second input shaft 34B. Therefore, because the universal joint mechanisms 20A and 20B are arranged on each end portion of the axle 37, the transmission system of the rotational force to the wheel 16 is simplified. Hence, it is possible to simplify the structure and ensure a sufficient minimum ground clearance.

Incidentally, in the drive wheel 103 of the first embodiment, the axial center directions of the first output shaft 40A and the axle 37 are different from each other by 90 degrees. Therefore, the first power conversion mechanism (first bevel gear mechanism 15A, first helical gear mechanism 17A, first worm gear mechanism 18A, first crown gear mechanism 19A, and first universal joint mechanism 20A) that transmits the rotational force of the first output shaft 40A to one end portion of the axle 37, transmits the rotational force of the first output shaft 40A to one end portion of the axle 37 the axial center direction of which is different from that of the first output shaft 40A. Moreover, the axial center directions of the second output shaft 40B and the axle 37 are different from each other by 90 degrees. Therefore, the second power conversion mechanism (second bevel gear mechanism 15B, second helical gear mechanism 17B, second worm gear mechanism 18B, second crown gear mechanism 19B, and second universal joint mechanism 20B) that transmits the rotational force of the second output shaft 40B to one end portion of the axle 37, transmits the rotational force of the second output shaft 40B to the one end portion of the axle 37 the axial center direction of which is different from that of the second output shaft 40B.

In the drive wheel 103 of the first embodiment, as described above, the input unit 11 includes the dual shaft integrated motor 30, and two rotational forces are supplied to the pivot center of the wheel 16. Hence, the first input shaft 34A, the second input shaft 34B, and the pivot shaft 35 are coaxially and rotatably disposed along the axial center O1. Furthermore, in the drive wheel of the first embodiment, the rotational force of the first input shaft 34A and the second input shaft 34B is transmitted to the first output shaft 40A and the second output shaft 40B via the first spur gear mechanism 13A and the second spur gear mechanism 13B. Hence, the axial center O3 of the first output shaft 40A and the axial center O4 of the second output shaft 40B are in parallel with the axial center O1. Still furthermore, the axle 37 of the wheel 16 extends along the axial center O2 direction orthogonal to the axial center O1 direction. Hence, to transmit the rotational force of the first output shaft 40A and the second output shaft 40B to the axle 37 the axial center direction of which is different by 90 degrees, the first power conversion mechanism (first bevel gear mechanism 15A, first helical gear mechanism 17A, first worm gear mechanism 18A, first crown gear mechanism 19A, and first universal joint mechanism 20A) and the second power conversion mechanism (second bevel gear mechanism 15B, second helical gear mechanism 17B, second worm gear mechanism 18B, second crown gear mechanism 19B, and second universal joint mechanism 20B) are provided.

The configuration of the power conversion mechanism is not limited to what has been described above, and it is sufficient that the rotational force of the output shafts 40A and 40B is transmitted to the axle 37 the axial center direction of which is different from that of the output shafts 40A and 40B.

Second Embodiment

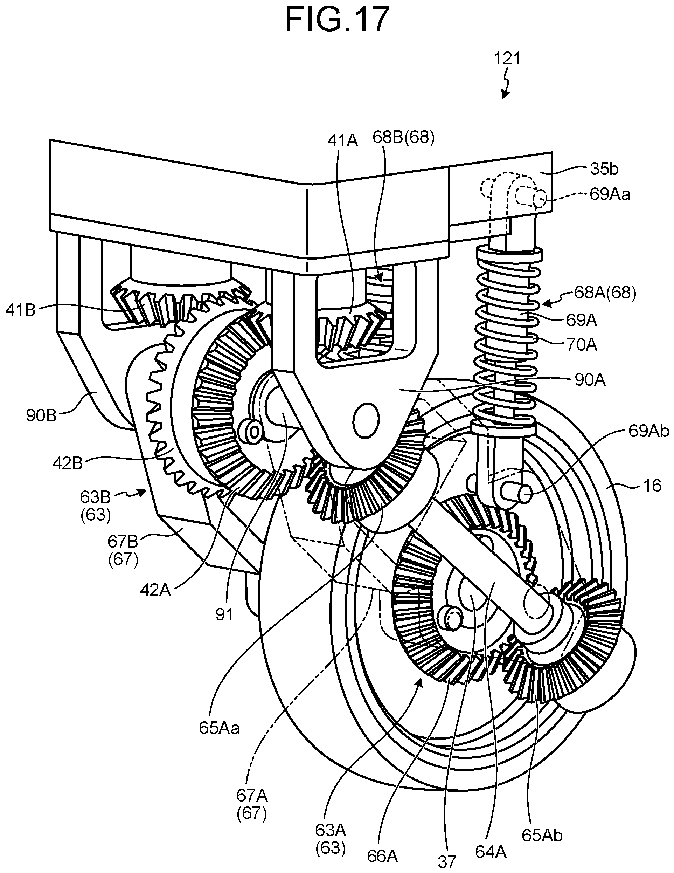

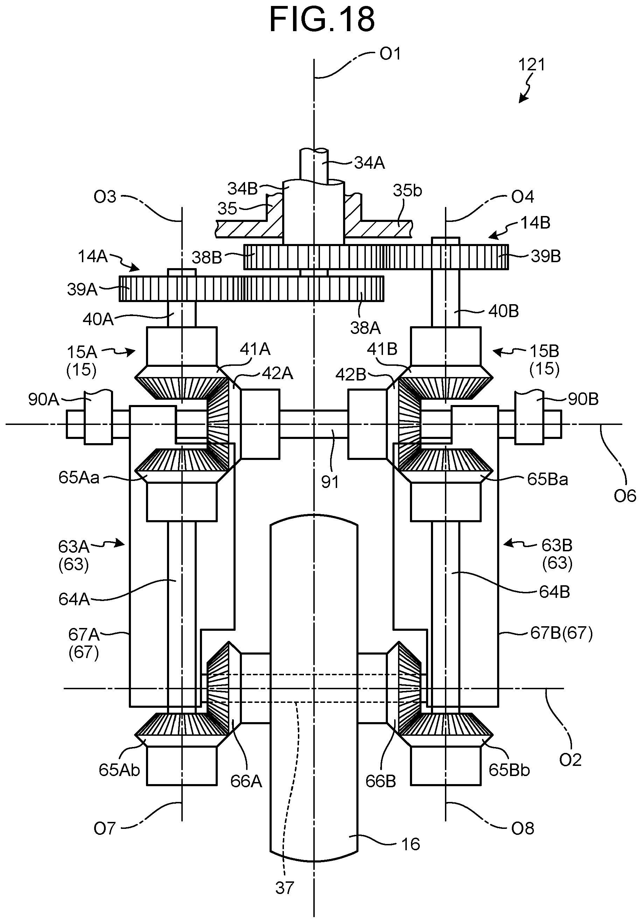

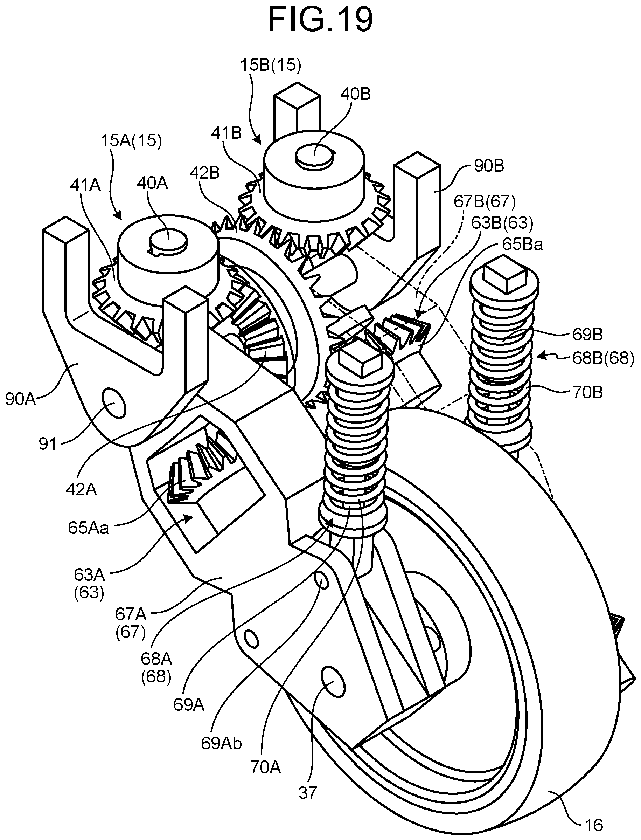

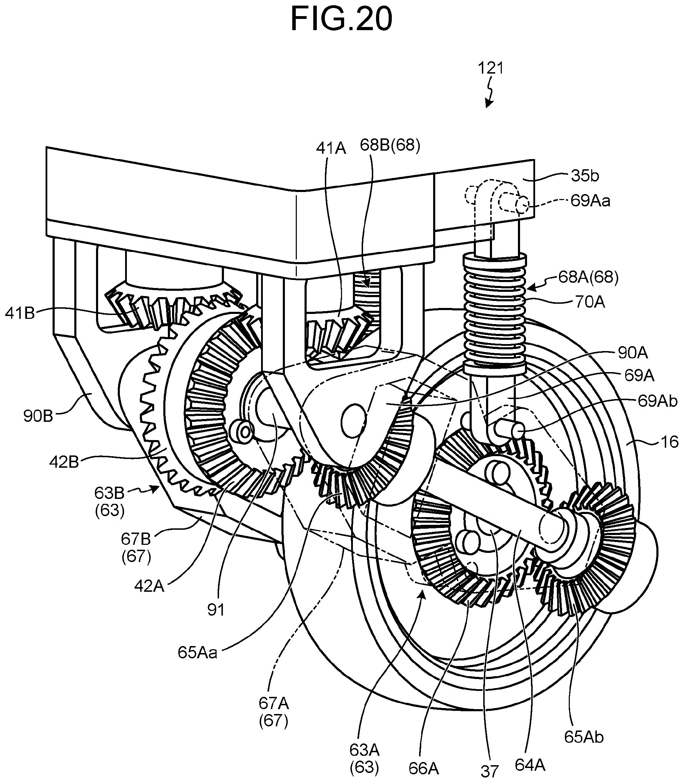

FIG. 17 is a perspective view illustrating a configuration example of a drive wheel of a second embodiment. FIG. 18 is a schematic view illustrating the drive wheel of the second embodiment. FIG. 19 is a perspective view illustrating the drive wheel of the second embodiment. FIG. 20 is a perspective view illustrating the drive wheel of the second embodiment. The same reference numerals are given to members having the same functions as those in the embodiment described above, and the detailed description thereof will be omitted.

In the second embodiment, similar to the drive wheel 103 of the first embodiment, a drive wheel 121 includes the input unit 11, the turning part 12, the spur gear mechanism 13, the output unit 14 (14A, 14B), the bevel gear mechanism 15 (15A, 15B) serving as a power conversion mechanism, and the wheel 16. Moreover, the drive wheel 121 is different from the drive wheel 103 of the first embodiment in including a power transmission mechanism 63, a slide mechanism 67, and an elastic member 68.

The first input shaft 34A, the second input shaft 34B, and the pivot shaft 35 are coaxially and rotatably disposed along the axial center O1. The first drive spur gear 38A is fixed to the lower end portion of the first input shaft 34A, and the second drive spur gear 38B is fixed to the lower end portion of the second input shaft 34B. The first drive spur gear 38A meshes with the first driven spur gear 39A, and the second drive spur gear 38B meshes with the second driven spur gear 39B. The second drive spur gear 38B and the first drive spur gear 38A are stacked vertically and rotate around the axial center O1. The first driven spur gear 39A is fixed to the upper portion of the first output shaft 40A. The first output shaft 40A is rotatably supported by the pivot shaft 35 around the axial center 03. The second driven spur gear 39B is fixed to the upper portion of the second output shaft 40B, and the second output shaft 40B is rotatably supported by the pivot shaft 35 around the axial center 04.

The first drive bevel gear 41A is fixed to the lower portion of the first output shaft 40A. The second drive bevel gear 41B is fixed to the lower portion of the second output shaft 40B. The first driven bevel gear 42A that meshes with the first drive bevel gear 41A, and the second driven bevel gear 42B that meshes with the second drive bevel gear 41B are fixed to a connection shaft 91. The connection shaft 91 is orthogonal to the axial center O1, and parallel to the axial center O2. Both end portions of the connection shaft 91 are rotatably supported by shaft support members 90A and 90B that are fixed to the cover member 35c of the pivot shaft 35, and that are disposed on one side and the other side of the wheel 16. A first power transmission mechanism 63A of the power transmission mechanism 63 is provided between the first bevel gear mechanism 15A and one end portion of the axle 37. A second power transmission mechanism 63B of the power transmission mechanism 63 is provided between the second bevel gear mechanism 15B and the other end portion of the axle 37.

The first power transmission mechanism 63A is disposed on one side of the wheel 16, and includes a first propeller shaft 64A, a power transmission bevel gear 65Aa fixed to one end of the first propeller shaft 64A, a power transmission bevel gear 65Ab fixed to the other end of the first propeller shaft 64A, and a first axle bevel gear 66A fixed to one end portion of the axle 37. The first propeller shaft 64A is rotatably provided on a first slide mechanism 67A of the slide mechanism 67. The power transmission bevel gear 65Ab meshes with the first driven bevel gear 42A. The power transmission bevel gear 65Ab meshes with the first axle bevel gear 66A.

The second power transmission mechanism 63B is disposed on the other side of the wheel 16, and includes a second propeller shaft 64B, a power transmission bevel gear 65Ba fixed to one end of the second propeller shaft 64B, a power transmission bevel gear 65Bb fixed to the other end of the second propeller shaft 64B, and a second axle bevel gear 66B fixed to the other end portion of the axle 37. The second propeller shaft 64B is rotatably provided on a second slide mechanism 67B of the slide mechanism 67. The power transmission bevel gear 65Bb meshes with the second driven bevel gear 42B. The power transmission bevel gear 65Bb meshes with the second axle bevel gear 66B.

In the drive wheel 121, when the first input shaft 34A is rotated, the first drive spur gear 38A is rotated, and rotates the first driven spur gear 39A. When the first driven spur gear 39A is rotated, the first drive bevel gear 41A rotates with the first output shaft 40A. Then, the first driven bevel gear 42A that meshes with the first drive bevel gear 41A is rotated, and causes the connection shaft 91 to rotate. The rotational force of the connection shaft 91 is transmitted to the axle 37 via the first power transmission mechanism 63A, and causes the axle 37 to rotate. On the other hand, in the drive wheel 121, when the second input shaft 34B is rotated in the opposite direction of the first input shaft 34A, the second drive spur gear 38B is rotated, and rotates the second driven spur gear 39B. When the second driven spur gear 39B is rotated, the second drive bevel gear 41B rotates with the second output shaft 40B. Then, the second driven bevel gear 42B that meshes with the second drive bevel gear 41B is rotated, and causes the connection shaft 91 to rotate. The rotational force of the connection shaft 91 is transmitted to the axle 37 via the second power transmission mechanism 63B, and causes the axle 37 to rotate.

The slide mechanism 67 includes the first slide mechanism 67A and the second slide mechanism 67B. The first slide mechanism 67A allows one end portion of the axle 37 to be moved along the extending direction of the first output shaft 40A, while maintaining transmission of the rotational force to the one end portion of the axle 37. The first slide mechanism 67A is rotatably provided on one end portion of the connection shaft 91. The first slide mechanism 67A rotatably supports one end portion of the axle 37. Moreover, the first slide mechanism 67A rotatably supports the first propeller shaft 64A of the first power transmission mechanism 63A. Thus, at one end portion of the connection shaft 91, the first slide mechanism 67A swings around the axial center O2 of the connection shaft 91, while maintaining the power transmission bevel gear 65Aa of the first propeller shaft 64A to be meshed with the first driven bevel gear 42A, maintaining the power transmission bevel gear 65Aa of the first propeller shaft 64A to be meshed with the first axle bevel gear 66A, and maintaining the rotation of the first propeller shaft 64A. As a result, the first slide mechanism 67A allows one end portion of the axle 37 to be moved along the vertical direction, that is, the extending direction of the first output shaft 40A, while maintaining transmission of the rotational force to the one end portion of the axle 37.

The second slide mechanism 67B allows the other end portion of the axle 37 to be moved along the extending direction of the second output shaft 40B, while maintaining transmission of the rotational force to the other end portion of the axle 37. The second slide mechanism 67B is rotatably provided on the other end portion of the connection shaft 91. The second slide mechanism 67B rotatably supports the other end portion of the axle 37. Moreover, the second slide mechanism 67B rotatably supports the second propeller shaft 64B of the second power transmission mechanism 63B. Thus, at the other end portion of the connection shaft 91, the second slide mechanism 67B swings around the axial center O2 of the connection shaft 91, while maintaining the power transmission bevel gear 65Ba of the second propeller shaft 64B to be meshed with the second driven bevel gear 42B, maintaining the power transmission bevel gear 65Ba of the second propeller shaft 64B to be meshed with the second axle bevel gear 66B, and maintaining the rotation of the second propeller shaft 64B. As a result, the second slide mechanism 67B allows the other end portion of the axle 37 to be moved along the vertical direction, that is, the extending direction of the second output shaft 40B, while maintaining transmission of the rotational force to the other end portion of the axle 37.

The elastic member 68 includes a first elastic member 68A and a second elastic member 68B.

The first elastic member 68A is disposed on one side of the wheel 16, and includes a first telescopic arm 69A and a first compression coil spring 70A. One end and the other end of the first telescopic arm 69A are extensible in the extending direction. One end of the first telescopic arm 69A is fitted to the flange part 35b of the pivot shaft 35 via a shaft 69Aa parallel to the axle 37. The other end of the first telescopic arm 69A is fitted closer to the axle 37 in the first slide mechanism 67A via a shaft 69Ab parallel to the axle 37. Therefore, the first telescopic arm 69A extends and contracts according to the movement of the first slide mechanism 67A (wheel 16). The first telescopic arm 69A passes through the first compression coil spring 70A, and the first compression coil spring 70A is sandwiched between one end and the other end of the first telescopic arm 69A. Therefore, the first compression coil spring 70A elastically supports the movement of the first slide mechanism 67A (wheel 16), by applying elastic force. The first telescopic arm 69A may also be configured as a hydraulic or pneumatic damper, and can function as a shock absorbing mechanism.

The second elastic member 68B is disposed on the other side of the wheel 16, and is symmetrically arranged with the first elastic member 68A. The second elastic member 68B includes a second telescopic arm 69B and a second compression coil spring 70B. One end and the other end of the second telescopic arm 69B are extensible in the extending direction. One end of the second telescopic arm 69B is fitted to the cover member 35c of the pivot shaft 35 via a shaft parallel to the axle 37. The other end of the second telescopic arm 69B is fitted closer to the axle 37 in the second slide mechanism 67B via a shaft parallel to the axle 37. Therefore, the second telescopic arm 69B extends and contracts according to the movement of the second slide mechanism 67B (wheel 16). The second telescopic arm 69B passes through the second compression coil spring 70B, and the second compression coil spring 70B is sandwiched between one end and the other end of the second telescopic arm 69B. Therefore, the second compression coil spring 70B elastically supports the movement of the second slide mechanism 67B (wheel 16), by applying elastic force. The second telescopic arm 69B may also be configured as a hydraulic or pneumatic damper, and can function as a shock absorbing mechanism.

Thus, the elastic member 68 elastically supports the movement of the axle 37 by the first slide mechanism 67A and the second slide mechanism 67B of the slide mechanism 67, by applying elastic force.

The drive wheel 121 of the second embodiment can rotate and steer the wheel 16 by rotating the first input shaft 34A and the second input shaft 34B by the motor 30 via the first rotating cylinder 32A and the second rotating cylinder 32B. That is, the wheel 16 can be rotated without steering, by rotating the first input shaft 34A and rotating the second input shaft 34B in the opposite direction of the first input shaft 34A, and by setting the rotational frequencies (rotational speed) of the first input shaft 34A and the second input shaft 34B to be the same. In this process, by setting the rotational frequency (rotational speed) of the first input shaft 34A and the second input shaft 34B different from each other, it is possible to steer the wheel 16 in a rotating state or in a stopped state.

Because the operation of rotating and steering the drive wheel 121 is substantially the same as that of the drive wheel 103 of the first embodiment, the description thereof will be omitted.

In this manner, in the drive wheel 121 of the second embodiment, the first power transmission mechanism 63A is provided between the first bevel gear mechanism 15A and one end portion of the axle 37, and the second power transmission mechanism 63B is provided between the second bevel gear mechanism 15B and the other end portion of the axle 37. Thus, the drive wheel 121 can easily transmit the driving force of the bevel gear mechanisms 15A and 15B to the axle 37 by the power transmission mechanisms 63A and 63B. Moreover, in the drive wheel 121 of the second embodiment, the rotational axial center O5 of the wheel 16 along the vertical direction intersecting the axial center O2 direction of the axle 37 is arranged shifted in the horizontal direction orthogonal to the axial center O2 direction of the axle 37 with respect to the axial center O1 of the pivot shaft 35. Therefore, when the wheel 16 is not driven, it is possible to passively turn the wheel 16 by the external force applied from the horizontal direction. That is, not only the cart 100 can be driven automatically and steered automatically, but the operator can also manually drive and manually steer the cart 100.

Also, the drive wheel 121 of the second embodiment further includes the slide mechanism 67 and the elastic member 68. Therefore, the rotational force of the first output shaft 40A and the second output shaft 40B is transmitted to the wheel 16 connected to the axle 37 by the first power transmission mechanism 63A and the second power transmission mechanism 63B, and the wheel 16 connected to the axle 37 is movably provided in the extending direction of the first output shaft 40A and the second output shaft 40B by the first slide mechanism 67A and the second slide mechanism 67B, while being elastically supported by the elastic member 68. Therefore, even if there are ups and downs or obstacles such as trash or pebbles on the ground surface (floor surface), it is possible to travel the ups and downs and over the obstacles with elasticity, and improve the running performance.

In the drive wheel 121 of the second embodiment, the elastic member 68 includes the first elastic member 68A that elastically supports one end portion of the axle 37 and the second elastic member 68B that elastically supports the other end portion of the axle 37. Therefore, by elastically supporting each end portion of the axle 37 by the first elastic member 68A and the second elastic member 68B, the inclination of the axial center O2 of the axle 37 is supported by applying elastic force. Hence, even if there are ups and downs or obstacles such as trash or pebbles on the ground surface (floor surface), it is possible to further improve the running performance for traveling the ups and downs or obstacles such as trash or pebbles with elasticity.

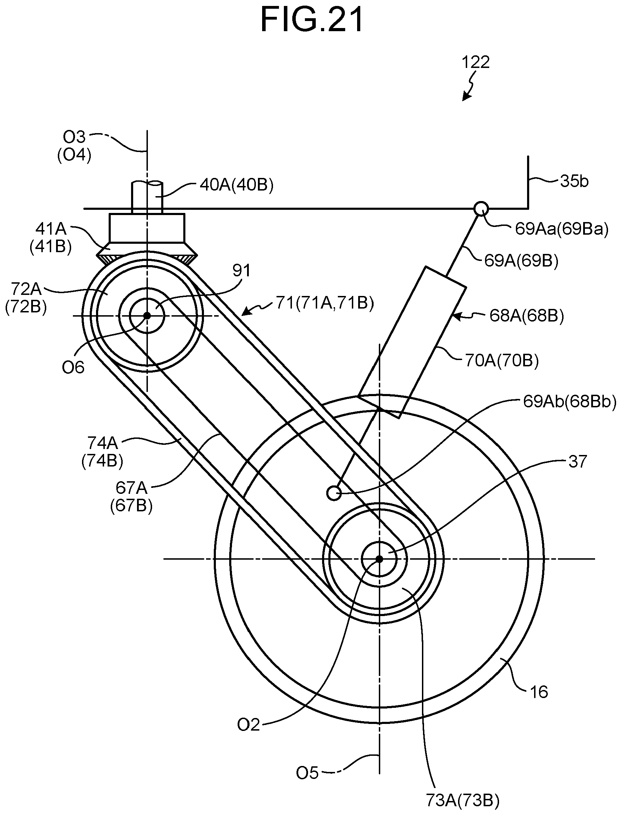

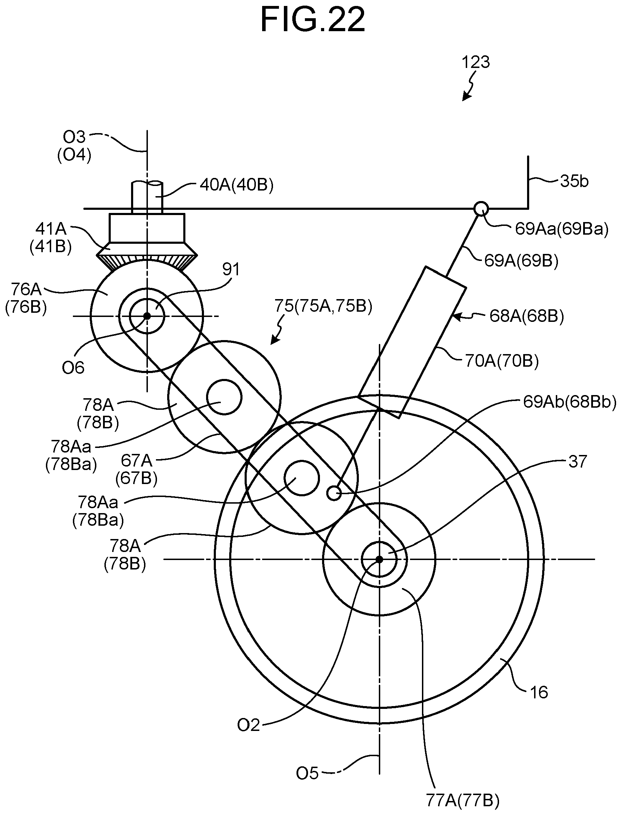

In this example, FIG. 21 and FIG. 22 are each a side view illustrating another configuration example of the drive wheel of the second embodiment.

In a drive wheel 122 illustrated in FIG. 21, the configuration of a power transmission mechanism 71 is different from that of the drive wheel 121 described above. The other configuration of the drive wheel 122 is the same as that of the drive wheel 121, and a detailed description of the same configuration will be omitted.

The power transmission mechanism 71 includes a first power transmission mechanism 71A and a second power transmission mechanism 71B. The first power transmission mechanism 71A is disposed on one side of the wheel 16, and includes a first drive pulley 72A, a first driven pulley 73A, and a first drive belt 74A. The first drive pulley 72A is fixed to one end portion of the connection shaft 91. The first driven pulley 73A is fixed to one end portion of the axle 37. The first drive belt 74A is formed in a ring shape, and is wound around the first drive pulley 72A and the first driven pulley 73A. The first power transmission mechanism 71A can also be configured by replacing the first drive pulley 72A and the first driven pulley 73A with sprockets, and replacing the first drive belt 74A with a chain.

The second power transmission mechanism 71B is disposed on the other side of the wheel 16, and includes a second drive pulley 72B, a second driven pulley 73B, and a second drive belt 74B. The second drive pulley 72B is fixed to the other end portion of the connection shaft 91. The second driven pulley 73B is fixed to the other end portion of the axle 37. The second drive belt 74B is formed in a ring shape, and is wound around the second drive pulley 72B and the second driven pulley 73B. The second power transmission mechanism 71B can also be configured by replacing the second drive pulley 72B and the second driven pulley 73B with sprockets, and replacing the second drive belt 74B with a chain.

In the drive wheel 122, when the first input shaft 34A is rotated, the first drive spur gear 38A is rotated, and rotates the first driven spur gear 39A. When the first driven spur gear 39A is rotated, the first drive bevel gear 41A rotates with the first output shaft 40A. Then, the first driven bevel gear 42A that meshes with the first drive bevel gear 41A is rotated, and causes the connection shaft 91 to rotate. The rotational force of the connection shaft 91 is transmitted to the axle 37 via the first drive pulley 72A, the first drive belt 74A, and the first driven pulley 73A, and causes the axle 37 to rotate. On the other hand, when the second input shaft 34B is rotated in the opposite direction of the first input shaft 34A, the second drive spur gear 38B is rotated, and rotates the second driven spur gear 39B. When the second driven spur gear 39B is rotated, the second drive bevel gear 41B rotates with the second output shaft 40B. Then, the second driven bevel gear 42B that meshes with the second drive bevel gear 41B is rotated, and causes the connection shaft 91 to rotate. The rotational force of the connection shaft 91 is transmitted to the axle 37 via the second drive pulley 72B, the second drive belt 74B, and the second driven pulley 73B, and causes the axle 37 to rotate.

In this manner, in the drive wheel 122, the first power transmission mechanism 71A is provided between the first bevel gear mechanism 15A and one end portion of the axle 37, and the second power transmission mechanism 71B is provided between the second bevel gear mechanism 15B and the other end portion of the axle 37. Thus, the drive wheel 122 can easily transmit the driving force of the bevel gear mechanisms 15A and 15B to the axle 37 by the power transmission mechanisms 71A and 71B. Moreover, in the drive wheel 122, the rotational axial center O5 of the wheel 16 along the vertical direction intersecting the axial center O2 direction of the axle 37 is arranged shifted in the horizontal direction orthogonal to the axial center O2 direction of the axle 37 with respect to the axial center O1 of the pivot shaft 35. Therefore, when the wheel 16 is not driven, it is possible to passively turn the wheel 16 by the external force applied from the horizontal direction. That is, not only the cart 100 can be driven automatically and steered automatically, but the operator can also manually drive and manually steer the cart 100. Also, the drive wheel 122 further includes the slide mechanism 67 and the elastic member 68. Therefore, the rotational force of the first output shaft 40A and the second output shaft 40B is transmitted to the wheel 16 connected to the axle 37 by the first power transmission mechanism 71A and the second power transmission mechanism 71B, and the wheel 16 connected to the axle 37 is movably provided in the extending direction of the first output shaft 40A and the second output shaft 40B by the first slide mechanism 67A and the second slide mechanism 67B, while being elastically supported by the first elastic member 68A and the second elastic member 68B. Therefore, even if there are ups and downs or obstacles such as trash or pebbles on the ground surface (floor surface), it is possible to travel the ups and downs and over the obstacles with elasticity, and improve the running performance.

In a drive wheel 123 illustrated in FIG. 22, the configuration of a power transmission mechanism 75 is different from that of the drive wheel 121 described above. The other configuration of the drive wheel 123 is the same as that of drive wheel 121, and a detailed description of the same configuration will be omitted.

The power transmission mechanism 75 includes a first power transmission mechanism 75A and a second power transmission mechanism 75B. The first power transmission mechanism 75A is disposed on one side of the wheel 16, and includes a first drive spur gear 76A, a first driven spur gear 77A, and a first intermediate spur gear 78A. The first drive spur gear 76A is fixed to one end portion of the connection shaft 91. The first driven spur gear 77A is fixed to one end portion of the axle 37. The first drive intermediate spur gear 78A is rotatably provided on the first slide mechanism 67A via a shaft 78Aa parallel to the axle 37, and meshes with the first drive spur gear 76A and the first driven spur gear 77A. A plurality of the first drive intermediate spur gears 78A may be provided.

The second power transmission mechanism 75B is disposed on the other side of the wheel 16, and includes a second drive spur gear 76B, a second driven spur gear 77B, and a second intermediate spur gear 78B. The second drive spur gear 76B is fixed to the other end portion of the connection shaft 91. The second driven spur gear 77B is fixed to the other end portion of the axle 37. The second drive intermediate spur gear 78B is rotatably provided on the second slide mechanism 67B via a shaft 78Ba parallel to the axle 37, and meshes with the second drive spur gear 76B and the second driven spur gear 77B. A plurality of the second drive intermediate spur gears 78B may be provided.

In the drive wheel 123, when the first input shaft 34A is rotated, the first drive spur gear 38A is rotated, and rotates the first driven spur gear 39A. When the first driven spur gear 39A is rotated, the first drive bevel gear 41A rotates with the first output shaft 40A. Then, the first driven bevel gear 42A that meshes with the first drive bevel gear 41A is rotated, and causes the connection shaft 91 to rotate. The rotational force of the connection shaft 91 is transmitted to the axle 37 via the first drive spur gear 76A, the first intermediate spur gear 78A, and the first driven spur gear 77A, and causes the axle 37 to rotate. On the other hand, when the second input shaft 34B is rotated in the opposite direction of the first input shaft 34A, the second drive spur gear 38B is rotated, and rotates the second driven spur gear 39B. When the second driven spur gear 39B is rotated, the second drive bevel gear 41B rotates with the second output shaft 40B. Then, the second driven bevel gear 42B that meshes with the second drive bevel gear 41B is rotated, and causes the connection shaft 91 to rotate. The rotational force of the connection shaft 91 is transmitted to the axle 37 via the second drive spur gear 76B, the second intermediate spur gear 78B, and the second driven spur gear 77B, and causes the axle 37 to rotate.

In this manner, in the drive wheel 123, the first power transmission mechanism 75A is provided between the first bevel gear mechanism 15A and one end portion of the axle 37, and the second power transmission mechanism 75B is provided between the second bevel gear mechanism 15B and the other end portion of the axle 37. Thus, the drive wheel 123 can easily transmit the driving force of the bevel gear mechanisms 15A and 15B to the axle 37 by the power transmission mechanisms 75A and 75B. Moreover, in the drive wheel 123, the rotational axial center O5 of the wheel 16 along the vertical direction intersecting the axial center O2 direction of the axle 37 is arranged shifted in the horizontal direction orthogonal to the axial center O2 direction of the axle 37 with respect to the axial center O1 of the pivot shaft 35. Therefore, when the wheel 16 is not driven, it is possible to passively turn the wheel 16 by the external force applied from the horizontal direction. That is, not only the cart 100 can be driven automatically and steered automatically, but the operator can also manually drive and manually steer the cart 100. Also, the drive wheel 123 further includes the slide mechanism 67 and the elastic member 68. Therefore, the rotational force of the first output shaft 40A and the second output shaft 40B is transmitted to the wheel 16 connected to the axle 37 by the first power transmission mechanism 75A and the second power transmission mechanism 75B, and the wheel 16 connected to the axle 37 is movably provided in the extending direction of the first output shaft 40A and the second output shaft 40B by the first slide mechanism 67A and the second slide mechanism 67B, while being elastically supported by the first elastic member 68A and the second elastic member 68B. Therefore, even if there are ups and downs or obstacles such as trash or pebbles on the ground surface (floor surface), it is possible to travel the ups and downs and over the obstacles with elasticity, and improve the running performance. Reference Signs List

11 input unit
12 turning part
13 spur gear mechanism
13A first spur gear mechanism
13B second spur gear mechanism
14 output unit
15 bevel gear mechanism (power conversion mechanism)
15A first bevel gear mechanism (first power conversion mechanism)
15B second bevel gear mechanism (second power conversion mechanism)
16 wheel
17 helical gear mechanism (power conversion mechanism)
17A first helical gear mechanism (first power conversion mechanism)
17B second helical gear mechanism (second power conversion mechanism)
18 worm gear mechanism (power conversion mechanism)
18A first worm gear mechanism (first power conversion mechanism)
18B second worm gear mechanism (second power conversion mechanism)
19 crown gear mechanism (power conversion mechanism)
19A first crown gear mechanism (first power conversion mechanism)
19B second crown gear mechanism (second power conversion mechanism)
20 universal joint mechanism (power conversion mechanism)
20A first universal joint mechanism (first power conversion mechanism)
20B second universal joint mechanism (second power conversion mechanism)
25 slide mechanism
25A first slide mechanism

25B second slide mechanism
26 elastic member
26A first elastic member
26B second elastic member
34A first input shaft
34B second input shaft
35 pivot shaft
37 axle
38A first drive spur gear
38B second drive spur gear
39A first driven spur gear
39B second driven spur gear
40A first output shaft
40B second output shaft
41A first drive bevel gear
41B second drive bevel gear
42A first driven bevel gear
42B second driven bevel gear
63 power transmission mechanism
63A first power transmission mechanism
63B second power transmission mechanism
67 slide mechanism
67A first slide mechanism
67B second slide mechanism
68 elastic member
68A first elastic member
68B second elastic member
71 power transmission mechanism
71A first power transmission mechanism
71B second power transmission mechanism
75 power transmission mechanism
75A first power transmission mechanism
75B second power transmission mechanism
91 connection shaft
100 cart
101 main body
102 handle part
103, 121, 122, 123 drive wheel

**Claims**

1. A drive wheel, comprising:

a first input shaft and a second input shaft coaxially disposed;
a first output shaft and a second output shaft disposed on different axes;
a first spur gear mechanism that transmits rotational force of the first input shaft to the first output shaft;
a second spur gear mechanism that transmits rotational force of the second input shaft to the second output shaft;
a wheel connected to an axle;
a pivot shaft that supports the wheel in a pivotable manner via the axle;
a first power conversion mechanism that transmits the rotational force of the first output shaft to one end portion of the axle;

a second power conversion mechanism that transmits the rotational force of the second output shaft to another end portion of the axle;

a first slide mechanism that allows one end portion of the axle to be moved along an extending direction of the first output shaft, while maintaining transmission of the rotational force to the one end portion of the axle;

a second slide mechanism that allows the other end portion of the axle to be moved along an extending direction of the second output shaft, while maintaining transmission of the rotational force to the other end portion of the axle; and

an elastic member that elastically supports the axle.

2. The drive wheel according to claim 1, wherein a rotational axial center of the wheel along a vertical direction intersecting an axial center of the axle is arranged shifted in a horizontal direction orthogonal to the axial center of the axle with respect to an axial center of the pivot shaft.

3. The drive wheel according to claim 1 or 2, wherein the elastic member includes a first elastic member that elastically supports one end portion of the axle, and a second elastic member that elastically supports the other end portion of the axle.

4. The drive wheel according to any one of claims 1 to 3, wherein the first output shaft and the second output shaft are arranged on both sides in an axial center direction of the axle.

5. The drive wheel according to any one of claims 1 to 4, wherein the first power conversion mechanism and the second power conversion mechanism are arranged on both sides in the axial center direction of the axle.

6. The drive wheel according to claim 5, wherein the first power conversion mechanism and the second power conversion mechanism are arranged on an upper side in a vertical direction intersecting the axial center direction of the axle.

7. The drive wheel according to any one of claims 1 to 6, wherein

the first power conversion mechanism transmits the rotational force of the first output shaft to one end portion of the axle the axial center direction of which is different from that of the first output shaft, and to which one of a bevel gear mechanism, a helical gear mechanism, a worm gear mechanism, a crown gear mechanism, and a universal joint mechanism is applied, and the second power conversion mechanism transmits the rotational force of the second output shaft to one end portion of the axle the axial center direction of which is different from that of the second output shaft, and to which one of a bevel gear mechanism, a helical gear mechanism, a worm gear mechanism, a crown gear mechanism, and a universal joint mechanism is applied.

8. A drive wheel, comprising:

a first input shaft and a second input shaft coaxially disposed;

a first output shaft and a second output shaft disposed on different axes;

a first spur gear mechanism that transmits rotational force of the first input shaft to the first output shaft;

a second spur gear mechanism that transmits rotational force of the second input shaft to the second output shaft;

a wheel connected to an axle;

a pivot shaft that supports the wheel in a pivotable manner via the axle;

a first power conversion mechanism that transmits the rotational force of the first output shaft to one end portion of a connection shaft parallel to the axle;

a second power conversion mechanism that transmits the rotational force of the second output shaft to another end portion of the connection shaft;

a first power transmission mechanism that transmits the rotational force of the connection shaft to one end portion of the axle;

a second power transmission mechanism that transmits the rotational force of the connection shaft to another end portion of the axle;

a first slide mechanism that allows one end portion of the axle to be moved along an extending direction of the first output shaft, while maintaining transmission of the rotational force by the first power transmission mechanism;

a second slide mechanism that allows the other end portion of the axle to be moved along an extending direction of the second output shaft, while maintaining transmission of the rotational force by the first power transmission mechanism; and

an elastic member that elastically supports the axle,

a rotational axial center of the wheel along a vertical direction intersecting an axial center direction of the axle being arranged shifted in a horizontal direction orthogonal to the axial center direction of the axle with respect to an axial center of the pivot shaft.

9. The drive wheel according to claim 8, wherein the elastic member includes a first elastic member that elastically supports one end portion of the axle, and a second elastic member that elastically supports the other end portion of the axle.

10. The drive wheel according to claim 8 or 9, wherein the first output shaft and the second output shaft are arranged on both sides in an axial center direction of the connection shaft.

11. The drive wheel according to any one of claims 8 to 10, wherein the first power conversion mechanism and the second power conversion mechanism are arranged on both sides in the axial center direction of the connection shaft.

12. The drive wheel according to claim 11, wherein the first power conversion mechanism and the second power conversion mechanism are arranged on an upper side in a vertical direction intersecting the axial center direction of the connection shaft.

13. The drive wheel according to any one of claims 8 to 12, wherein

the first power conversion mechanism transmits the rotational force of the first output shaft to one end portion of the connection shaft the axial center direction of which is different from that of the first output shaft, and to which one of a bevel gear mechanism, a helical gear mechanism, a worm gear mechanism, a crown gear mechanism, and a universal joint mechanism is applied, and
the second power conversion mechanism transmits the rotational force of the second output shaft to one end portion of the connection shaft the axial center direction of which is different from that of the second output shaft, and to which one of a bevel gear mechanism, a helical gear mechanism, a worm gear mechanism, a crown gear mechanism, and a universal joint mechanism is applied.

14. The drive wheel according to any one of claims 1 to 13, wherein the pivot shaft is coaxially disposed with the first input shaft and the second input shaft.

15. A cart, comprising:

the drive wheel according to any one of claims 1 to 14, and
a main body to which the drive wheel is fitted.

# FIG.1

# FIG.2

# FIG.3

# FIG.4

# FIG.5

# FIG.6

# FIG.7

# FIG.8

# FIG.9

# FIG.10

# FIG.11

# FIG.12

# FIG.13

# FIG.14

# FIG.15

# FIG.16

# FIG.17

# FIG.18

# FIG.19

# FIG.20

# FIG.21

# FIG.22

**EP 4 349 680 A1**

<table>
<tr><td colspan="2" align="center">INTERNATIONAL SEARCH REPORT</td><td>International application No.<br><br>**PCT/JP2022/020779**</td></tr>
</table>

**A. CLASSIFICATION OF SUBJECT MATTER**

*B61B 13/00*(2006.01)i; *F16H 1/02*(2006.01)i; *F16H 1/06*(2006.01)i; *F16H 1/14*(2006.01)i; *F16H 1/16*(2006.01)i; *B62D 9/00*(2006.01)i; *F16F 1/06*(2006.01)i

FI: B62D9/00; B61B13/00 A; F16H1/06; F16H1/14; F16H1/16; F16F1/06; F16H1/02

According to International Patent Classification (IPC) or to both national classification and IPC

**B. FIELDS SEARCHED**

Minimum documentation searched (classification system followed by classification symbols)

B61B13/00; F16H1/02; F16H1/06; F16H1/14; F16H1/16; B62D9/00; F16F1/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | Microfilm of the specification and drawings annexed to the request of Japanese Utility Model Application No. 067491/1987 (Laid-open No. 173895/1988) (HONDA MOTOR CO., LTD.) 11 November 1988 (1988-11-11), p. 6, line 5 to p. 12, line 5, fig. 1-4, 9 | 1-7, 14 |
| Y | | 8-13, 15 |
| Y | JP 2020-024033 A (NSK LTD, UNIV TOKYO AGRICULTURE & TECHNOLOGY) 13 February 2020 (2020-02-13) paragraphs [0074]-[0095], fig. 13-19 | 8-13, 15 |
| Y | JP 58-178038 A (MITSUI ZOSEN KK) 18 October 1983 (1983-10-18) p. 2, upper right column, line 13 to p. 3, upper left column, line 18, fig. 1 | 8-13, 15 |
| A | JP 2020-019361 A (NSK LTD) 06 February 2020 (2020-02-06) entire text, all drawings | 1-15 |
| A | JP 2020-070880 A (AISIN AW CO) 07 May 2020 (2020-05-07) entire text, all drawings | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 July 2022** | **02 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/020779**

| Patent document cited in search report | | | Publication date (day/month/year) | Patent family member(s) | Publication date (day/month/year) |
|---|---|---|---|---|---|
| JP | 63-173895 | U1 | 11 November 1988 | (Family: none) | |
| JP | 2020-024033 | A | 13 February 2020 | (Family: none) | |
| JP | 58-178038 | A | 18 October 1983 | (Family: none) | |
| JP | 2020-019361 | A | 06 February 2020 | (Family: none) | |
| JP | 2020-070880 | A | 07 May 2020 | (Family: none) | |

Form PCT/ISA/210 (patent family annex) (January 2015)

**REFERENCES CITED IN THE DESCRIPTION**

**Patent documents cited in the description**

- JP 2020024033 A